# EUROPÄISCHE PATENTSCHRIFT

(11) **EP 4 259 434 B1**
(45) Veröffentlichungstag und Bekanntmachung des Hinweises auf die Patenterteilung: **28.01.2026**
(21) Anmeldenummer: 21823606.5
(22) Anmeldetag: 09.12.2021
(51) Int. Cl.: B33Y 70/00, A61C 13/00

(54) **VERWENDUNG VON KERAMISCHER MISCHUNG ZUR HERSTELLUNG VON FORMKÖRPERN UND VERFAHREN ZU DEREN HERSTELLUNG**
USE OF CERAMIC MIXTURE FOR PRODUCING MOULDED ARTICLES AND METHODS FOR THE PRODUCTION THEREOF
UTILISATION DE MÉLANGE CÉRAMIQUE POUR PRODUIRE DES CORPS MOULÉS ET SON PROCÉDÉ DE PRODUCTION

(30) Priorität: 10.12.2020 EP 20213180
(43) Veröffentlichungstag der Anmeldung: 18.10.2023
(73) Patentinhaber: Pritidenta GmbH, 70771 Leinfelden-Echterdingen (DE)
(72) Erfinder: BÄR, Arthur, 75177 Pforzheim (DE); REUSCH, Berthold, 81375 München (DE); FIGGE, David, 64653 Lorsch (DE)
(74) Vertreter: Meissner Bolte Partnerschaft mbB
(86) Internationale Anmeldenummer: PCT/EP2021/085035
(87) Internationale Veröffentlichungsnummer: WO 2022/122945

(56) Entgegenhaltungen:
- CN-A- 109 111 223
- US-A1- 2017 081 500
- US-A1- 2019 337 235
- US-A1- 2020 172 444

## Beschreibung

### Technisches Gebiet der Erfindung

Die vorliegende Erfindung betrifft die Verwendung einer keramischen Mischung zur Herstellung von dentalen Formkörpern gemäß Anspruch 1, sowie ein Verfahren zur Herstellung eines dentalen Formkörpers gemäß Anspruch 9.

### Hintergrund der Erfindung

Die Nachfrage nach kostengünstigen, ästhetischen Zahnmaterialien ist in der restaurativen Zahnmedizin in den letzten Jahrzehnten drastisch gestiegen. Die meisten Patienten wünschen sich, dass ihre Zahnrestaurationen der natürlichen Zahnsubstanz sowie der Farbe und Transluzenz eines natürlichen Zahns ähneln.

Ein natürlicher Zahn hat keine einheitliche Färbung und Transluzenz. Zudem ist jeder Zahn in seiner dreidimensionalen Form individuell. Daher erfordert die Anfertigung von Zahnersatz wie z.B. von Brücken, eine dreidimensionale Färbung und Transluzenz. Jeder künstliche Zahn sollte sich farblich deutlich vom Nachbarzahn unterscheiden. Der Farbverlauf innerhalb eines Zahnes sollte vom Zahnschmelz bis zur gingivalen Präparationsgrenze (Dentin) homogen sein. Der Zahnschmelz (Enamel) ist im Vergleich zum Dentin lichtdurchlässiger und weniger farbintensiv. Daher sieht der obere Schmelzbereich eines Zahnes heller und lichtdurchlässiger aus als der untere Teil eines Zahnes.

Die Verwendung von keramischen oder metallischen Pulvern für die Herstellung von Zahnrestaurationen, also Zahnersatzteilen oder ganzen Zähnen, wie Implantaten oder Inlays, Onlays, Veneers, Kronen oder Brücken, ist seit langem bekannt. Ebenso sind Verbundwerkstoffe aus Keramik und Metall, sogenannte Cermets, allgemein bekannt. Als Gerüstwerkstoff für dentale Restaurationen werden vor allem Oxidkeramiken verwendet, da sich diese durch eine ausgezeichnete Biokompatibilität, hohe Festigkeit und hervorragende mechanische Eigenschaften auszeichnen. Bevorzugte Ausgangsmaterialien sind in letzter Zeit keramische Pulver und/oder keramische Granulate auf Basis von ZrO₂, Al₂O₃, Zirkoniumdioxid-verstärktem Aluminiumoxid (ZTA), Aluminiumoxid-verstärktem Zirkoniumoxid (ATZ), B₄C, SiC, Si₃N₄ oder TiO₂. Hierbei ist das Zirkonoxid jeweils stabilisiert, vorzugsweise mit CaO, Y₂O₃, La₂O₃, CeO₂, MgO, Er₂O₃, Pr₂O₃ und/oder Nb₂O₅ als Stabilisatoren. Ein besonders bevorzugtes keramisches Material ist teiloder vollstabilisiertes Zirkonoxid.

Generell besteht ein herkömmliches Verfahren zur Herstellung von Zahnrestaurationen aus mehreren Teilschritten. In einem ersten Schritt wird das Ausgangsmaterial zu einem Grünkörper verpresst. Anschließend erfolgt üblicherweise ein Vor- und Weißbrand, der einen stabilen dentalen Rohling für die weitere Bearbeitung, insbesondere eine weitere CAD/CAM Bearbeitung, ergibt. Das Ausgangsmaterial enthält im Allgemeinen einen sogenannten Binder, um das Pulver pressformbar zu machen. Als Binder werden Polysaccharide, wie Stärke, Zucker oder Cellulosederivate, Polymere, wie Polyvinylacetate, Polyvinylalkohole, Polyvinylpyrrolidone oder Polyacrylate, eingesetzt. Ein Binder sollte vorzugsweise keine Klebeneigung mit den Formwerkzeugen besitzen, das Ausgangsmaterial derartig verfestigen, dass eine Bearbeitung des Grünkörpers möglich ist, und während der Brennprozesse wieder vollständig und rückstandsfrei aus dem Rohling ausgebrannt werden können.

Additive Fertigungsverfahren, bei denen unterschiedliche Materialien über einen additiven Herstellungsprozess, beispielsweise mittels 3D-Druckern, zu einem individuellen Körper geformt werden, werden heutzutage nicht mehr nur zur Herstellung von Prototypen verwendet, sondern auch zur Fertigung diverser Produkte in Kleinserie oder sogar in Großserie eingesetzt. Die Bandbreite additiver Fertigungsverfahren, bei denen aus computergestützten Konstruktionsdaten (CAD-Daten) 3-dimensionale Modelle oder Bauteile hergestellt werden, hat in den letzten Jahren stark zugenommen. Mit additiven Verfahren können bereits Produkte mit individuellen Geometrien und vielfältigen Materialeigenschaften hergestellt werden. Beispielhaft für individuell geformte Körper mit unterschiedlichen Materialeigenschaften sei hier ein individuell geformter Zahnersatz genannt.

Zu additiven Fertigungsverfahren, zählen unter anderem die Stereolithographie (SLA), das Digital Light Processing (DLP), welches sich vom SLA Verfahren lediglich dadurch unterscheidet, dass mittels eines Projektors eine größere Fläche belichtet werden kann, das Continuous Digital Light Processing (CDLP), das Fused Deposition Modelling (FDM), das Material Jetting (MJ), das Nanoparticle Jetting (NPJ), das Drop on Demand (DOD), das Binder-Jetting (BJ), das Multi Jet Fusion (MJF), das Selektive Laser Sintering (SLS), das Direct Metal Laser Sintering oder auch Selective Laser Melting (DMLS/SLM), das Electron Beam Melting (EBM), das Laser Engineering Net Shape (LENS), das Electron Beam Additive Manufacturing (EBAM) oder das Laminated Object Manufacturing (LOM).

WO 2018/039688 A1 (EP 3 507 074 A1) beschreibt ein additives Verfahren zum Verfestigen eines photopolymerisierbaren diffus reflektierenden Materials. Dieses Verfahren wird auch als Lithography-based Ceramic Manufacturing (LCM)-Technologie bezeichnet. Es ermöglicht die Serienproduktion von additiv hergestellten Keramiken, unter anderem von dentalen Zahnrestaurationen mittels 3D-Druckern. Bei diesem Verfahren wird ein Gemisch aus Photopolymeren und einer Keramik (wie z.B. Zirkonoxid) durch gerichtete UV-Strahlung, d.h. mittels Licht, ausgehärtet. Durch die UV-Strahlung wird ein Polymerisationsprozess ausgelöst, wodurch sich die Polymerteilchen in der Suspension verbinden und verfestigen. Der so erzeugte Grünkörper besteht dabei zu einem Teil aus Keramik und zum anderen Teil aus Kunststoff. Beim anschließenden Sintervorgang werden die Kunststoffanteile aus dem Bauteil entfernt. Nachteilig an dem Verfahren der Stereolithographie sind die in dem Verfahren verwendeten, oftmals toxischen photopolymerisierbaren Monomere und Photoinitiatoren. Das Verfahren kann daher nur mit entsprechender Sicherheitsausrüstung durchgeführt werden. Des Weiteren ist es als negativ anzusehen, dass über Stereolithographie erzeugte Bauteile nachgehärtet werden müssen, um restliches, nicht ausgehärtetes Material auszuhärten. Zudem müssen die gedruckten Bauteile nachträglich in einer alkoholischen Lösung gereinigt werden. Ein weiterer signifikanter Nachteil dieses Verfahrens ist, dass die Herstellung von dentalen Keramiken mittels (LCM)-Technologie mit starken Transluzenzeinbußen verbunden ist. Transluzenz ist jedoch eine der wichtigsten ästhetischen Eigenschaften, die ein Dentalmaterial erfüllen muss.

Aus US 2018/0127317 A1 ist ein Sol bekannt, das als Ausgangsmaterial für die Herstellung von Keramikartikeln mittels additiven Verfahren, insbesondere mittels SLA-Techniken, geeignet ist. Das Material wird für die Verarbeitung durch insbesondere SLA-Technik verwendet und enthält photopolymerisierbare Monomere sowie Photoinitiatoren, die durch Strahlung polymerisieren und zu einem Gelnetzwerk führen. Ein wesentlicher Nachteil dieses Verfahrens ist, dass die in dem Sol enthaltenen Monomere und Photoinitiatoren toxisch sind. Nach dem Druck ist wie bei der LCM-Technologie meist eine Nachhärtung erforderlich. Einen weiteren Nachteil des Sols stellt dessen komplexe Zusammensetzung und Aufbereitung dar. Nachteilig sind zudem die sehr lange Trocknungsdauer und die verwendete, sehr aufwendige superkritische Extraktion (>23 h) bis es zu getrockneten Aerogelen kommt.

EP 3 659 989 A1 bzw. US 2020/0172444 A1 wendet das aus EP 1 268 211 B1 bekannte Laser Induced Forward Transfer (LIFT)-Verfahren auf die Herstellung von keramischen oder (glas-)keramischen Formteilen an und passt die bekannten Schlicker sowie das LIFT-Verfahren an. Unter einem LIFT-Verfahren wird ein Verfahren verstanden, bei dem durch einen Energieimpuls aus einem Druckmaterial eine kleine Materialmenge herausgelöst und auf ein Empfängersubstrat übertragen wird. Der Energieimpuls wird vorzugsweise durch einen Laser erzeugt. Der Laserstrahl wird dabei auf einen kleinen Bereich des Schlickers oder Stützmaterials fokussiert. Dadurch wird das Druckmaterial lokal so stark erhitzt, dass sich zumindest ein Bestandteil des Schlickers schlagartig ausdehnt. Dieser Bestandteil wird auch als Volumenausdehnungskomponente bezeichnet. Die Energietransformationskomponente absorbiert die Laserenergie und überträgt diese auf den Schlicker oder das Stützmaterial. Die schlagartig verdampfende Volumenausdehnungskomponente reißt den Schlicker oder das Stützmaterial mit und überträgt es auf das Empfängersubstrat. Es ist auch möglich, dass die Volumenausdehnungskomponente einen Teil der Energie direkt absorbiert. Ein Nachteil an diesem Verfahren stellt die Notwendigkeit der Verwendung eines Lasers dar, beziehungsweise die Notwendigkeit einer sehr starken Strahlung, die das Druckmaterial lokal schlagartig so stark erhitzt, dass sich bestimmte Bestandteile des Schlickers ausdehnen. Laser sind sehr kostspielig, wodurch das Verfahren für die Herstellung von dentalen Materialien an Attraktivität verliert. Ein weiterer Nachteil dieses Verfahrens ist, dass eine geeignete Energietransformationskomponente verwendet werden muss. Darüber hinaus ist die aufwendige Aufbereitung der benötigten Schlicker nachteilig, da für die Bildung homogener Schichten die Schlicker, Stützstrukturen und Trägersubstrate sehr gut aufeinander abgestimmt sein müssen.

Aus DE 10 2017 106 101 A1 ist ein Verfahren bekannt, bei dem durch generative Herstellung ein Formkörper erzeugt wird. Bei dem Formkörper kann es sich um ein dentales Formteil für die Zahnrestauration und/oder um ein dentales Formteil als Zahnersatz handeln und/oder um Hilfsteile für ein solches dentales Formteil. Das Verfahren umfasst einen Verfahrensschritt a) bei dem ein Rohkörper, insbesondere ein Grünkörper, bereitgestellt wird. Im Verfahrensschritt a) wird zumindest eine Schicht einer Dispersion bereitgestellt. Die Dispersion ist wasserbasiert, keramikbasiert und/oder glaskeramikbasiert und/oder pulvermetallbasiert hergestellt. Ferner wird in dem Verfahrensschritt a) die Schicht der Dispersion zumindest stellenweise verfestigt, indem Härter auf die Schicht der Dispersion aufgebracht werden. Im Verfahrensschritt b), der vorzugsweise auf den Verfahrensschritt a) folgt, wird der (Grün-)Rohkörper zu dem Formkörper gesintert. Nachteilig an diesem Verfahren ist, dass die Verwendung von mehreren Härtern erforderlich ist. In Verfahrensschritt a) ist die Verwendung von mindestens zwei Härter mit voneinander unterschiedlicher Materialzusammensetzung erforderlich. Ein weiterer Nachteil ist die aufwendige Farbeinstellung. Um eine Farbeinstellung vornehmen zu können, werden mindestens einem Härter verschiedene Metallkationen unterschiedlicher Übergangsmetalle zugesetzt, um neben der Aushärtung zusätzliche Farbgebungen erzielen zu können. Zudem ist dieses Verfahren mit langen Produktionszeiten verbunden.

US 2019/0337235 A1 beschreibt ein Verfahren zum dreidimensionalen Drucken eines Objekts unter Verwendung einer Stützstruktur. Mit diesem Verfahren soll ein verbessertes System zum Aufbau von überhängenden und schweren dreidimensionalen Objekten bereitgestellt werden. Bei diesem Verfahren wird in jeder Schicht die Stützstruktur sowie das eigentliche Bauteil gedruckt. Durch die Stützstruktur werden schwere Objekte beim Drucken stabilisiert. Zusätzlich wird ein strukturelles Additiv verwendet, um zu verhindern, dass sich die Stützstruktur beim nachfolgenden Sintern des Objekts mit dem Objekt verbindet. Die Stützstruktur und das dreidimensionale Objekt werden aus demselben Ausgangsmaterial hergestellt. Als Ausgangsmaterial, dem sogenannten "crafting medium", werden ein handelsüblicher Metallton, der aus sehr kleinen Metallpartikeln wie Gold, Bronze oder Kupfer besteht, oder ein keramisches Pulver verwendet. Der Metallton bzw. das keramische Pulver werden mit einem organischen Bindemittel und Wasser vermischt. Als organische Bindemittel kommen beispielsweise Cellulosematerialien, Agar, oder Natriumalginat in Frage. Das Ausgangsmaterial enthält jedoch kein Dispergiermittel. Ein wesentlicher Nachteil dieses Verfahrens ist, dass überhaupt eine Stützstruktur gedruckt werden muss. Für die Herstellung von dentalen Formkörpern kommt das Verfahren auch deshalb nicht in Betracht, da das Verfahren aufgrund des Druckens der Stützstrukturen sehr aufwendig ist.

Aus CN 109111223 A bzw. aus CN109111223 B sind eine keramische Titandioxid Suspension für den 3D Druck und ein Verfahren zu deren Herstellung bekannt. Die keramische Titandioxid Suspension enthält 60,00 bis 75,00 Gew.-% keramisches Titandioxid Material, 0,30 bis 1,20 Gew.-% Dispergiermittel, 0,05 bis 2,00 Gew.-% Bindemittel und 21,80 bis 39,65 Gew.-% Lösungsmittel, wobei das Dispergiermittel aus einer Kombination aus einem oder mehreren der Dispergiermittel Natriumhexametaphosphat, Natriumcitrat, und Natrium-tripolyphosphat ausgewählt wird. Das Bindemittel wird aus Natriumalginat, Natriumcarboxymethylcellulose, Polyethylenglycol, und Kaolin ausgewählt. Die aus der keramischen Titandioxid Suspension hergestellten Teile werden auf den Gebieten der Biomaterialien und der Photokatalyse verwendet. Titandioxid findet häufig Anwendung als Farbpigment in Farben, Lacken, Papier Textilien, Kosmetika, als UV-Schutz in Sonnencremes, sowie als Keramikfilter. Als Konstruktionskeramik ist Titandioxid jedoch weniger geeignet. Aufgrund mechanischer, sowie ästhetischer Eigenschaften kommt dieses Material für den Zahnersatz überhaupt nicht in Frage.

US 2017/0081500 A1 beschreibt ein Materialsystem und ein Verfahren zur Herstellung feuerfester 3D gedruckter Gegenstände mittels säurekatalysierter Copolymerisation von trockenem Granulat bzw. Sand und Furanmonomeren. Bei diesem Verfahren wird eine erste Mischung bereitgestellt, die eine erste teilchenförmige Komponente mit einem feuerfesten Material, und mindestens eine reaktive Komponente, beispielsweise ein Kohlenhydrat, enthält. Diese erste Mischung wird mit einer Säure behandelt, um eine erste reaktive teilchenförmige Mischung zu bilden. Somit entsteht ein trockenes Granulat, das mit einer reaktiven Komponente beschichtet ist. Eine flache Schicht dieser trockenen Partikelmischung wird auf eine Bauoberfläche verteilt. Durch einen Tintenstrahldruckkopf wird auf diese Partikelmischung ein flüssiges Bindemittel, das ein Furanmonomer, beispielsweise Furfuryl Alkohol, enthält, verteilt. Das Kohlehydrat wird durch Reaktion mit der Säure in kurzkettige Reste hydrolysiert, die in dem Furanmonomer löslich sind. Als Säuren werden Schwefelsäure, schweflige Säure Toluolsulfonsäure, Xylolsäure, Methansulfonsäure und/oder Benzolsulfonsäure verwendet. Bei diesen Säuren handelt es sich um homogene Katalysatoren für die Polymerisation von Furanmonomeren. Die erste reaktive teilchenförmige Mischung copolymerisiert mit dem Furanmonomer. Ein Nachteil dieses Verfahrens stellt die Notwendigkeit der Verwendung von starken Säuren als homogene Katalysatoren dar sowie die notwendige Umsetzung der Materialien aus der Gruppe der Kohlenhydrate, Cellulose und deren Derivate.

Keines der im Stand der Technik beschriebenen Ausgangsmaterialien, wie die oben beschriebenen Schlicker, Suspensionen oder Sole, und keines der bekannten additiven Verfahren sind für die technisch einfache und kostengünstige Herstellung von Formkörpern, insbesondere von dentalen Formkörpern, optimal geeignet.

US2020172444A1 offenbart einen Schlicker zur Herstellung von Keramikoder Glaskeramikformteilen mittels eines LIFT-Verfahrens, der (a) Keramikund/oder Glaskeramikpartikel, (b) Bindemittel, (c) mindestens eine Energietransformationskomponente und (d) mindestens ein Dispergiermittel enthält, sowie ein LIFT-Verfahren zur Herstellung von Keramik- oder Glaskeramikformteilen unter Verwendung des Schlickers.

Es besteht daher ein Bedarf an alternativen, nicht oder zumindest weniger toxischen Ausgangsmaterialien, die für die Herstellung von Formkörpern geeignet sind. Die alternativen Ausgangsmaterialien sollten insbesondere zur Herstellung von dentalen Formkörpern, geeignet sein, die zudem einen Farb-, Helligkeits- und Transluzenzgradienten aufweisen, der mit dem Farb-, Helligkeits- und Transluzenzgradienten eines natürlichen Zahns vergleichbar ist. Idealerweise sollten keine Farb-, Helligkeits- oder Transluzenzübergänge im finalen dentalen Formkörper erkennbar sein. Von besonderem Interesse ist daher die Herstellung von mono-materiellen und multi-materiellen dentalen Formkörpern durch horizontalen und vertikalen Aufbau über Schichten und/oder Punkte Zudem sollte das Ausgangsmaterial die Herstellung von dentalen Formkörpern in additiven Verfahren mittels 3D-Druckern ermöglichen. Darüber hinaus sollte die Einstellung der Farbe des dentalen Formkörpers auf einfache, kostengünstige Weise möglich sein.

### Zusammenfassung der Erfindung

Offenbart wird eine keramische Mischung, die zur Herstellung von Formkörpern geeignet ist, insbesondere von dentalen Formkörpern, enthaltend die folgenden Komponenten:
(a) ein ungefärbtes und/oder ein gefärbtes keramisches Pulver und/oder ein ungefärbtes und/oder ein gefärbtes keramisches Granulat und/oder Kombinationen davon auf der Basis von ZrO₂, Al₂O₃, Zirkoniumdioxid-verstärktem Aluminiumoxid (ZTA), Aluminiumoxid-verstärktem Zirkoniumoxid (ATZ), B₄C, SiC, oder Si₃N₄, wobei das ZrO₂ jeweils stabilisiert ist;
(b) mindestens ein Dispergiermittel;
(c) mindestens ein Hydrokolloid, vorzugsweise mindestens ein Polysaccharid und/oder ein Protein; und
(d) mindestens ein Lösungsmittel.

In einer Ausführungsform der hierin beschriebenen keramischen Mischung enthält die Komponente (a) keramische Pulver und/oder keramische Granulate auf Basis von ZrO₂, Al₂O₃, ZTA, oder ATZ, wobei das ZrO₂ jeweils mit CaO, Y₂O₃, La₂O₃, CeO₂, MgO, Er₂O₃, Pr₂O₃ und/oder Nb₂O₅ stabilisiert ist, besonders bevorzugt auf Basis von stabilisiertem ZrO₂.

In einer Ausführungsform enthalt die hierin beschriebene keramische Mischung von 35 Gew.-% bis 99 Gew.-%, vorzugsweise von 75 Gew.-% bis 95 Gew.-% der Komponente (a).

In einer Ausführungsform enthalt die hierin beschriebene keramische Mischung als Dispergiermittel (b) Aminoalkohole, wie Ethanolamin, Carbonsäuren, wie Maleinsäure und Citronensäure, Carbonsäuresalze, wie Citronensäuresalze oder vinyloge Carbonsäuren, wie Ascorbinsäure, und Salze davon sowie Mischungen davon, vorzugsweise mindestens ein Dispergiermittel ausgewählt aus Ethanolamin, Citronensäure, Citronensäuresalzen, und Ascorbinsäure, besonders bevorzugt sind L-Ascorbinsäure und Diammoniumhydrogencitrat.

In einer Ausführungsform enthalt die hierin beschriebene keramische Mischung mindestens ein Hydrokolloid (c) ausgewählt aus der Gruppe von Gellan, Hydroxypropylguar, Caseinat, Agarose, Carrageen, Alginat, Xanthan, Dextran, Scleroglucan, Stärke, Gummi arabicum, Galactomannane, Glucomannan, und Carubin, oder Mischungen davon.

In einer bevorzugten Ausführungsform enthält die hierin beschriebene keramische Mischung als Hydrokolloid (c) eine Kombination aus zwei Hydrokolloiden, bevorzugt aus Alginat und Pektin, oder aus Gelatine und Xanthan.

In der vorliegenden Erfindung wird das Hydrokolloid (c) als Gelbildner verwendet.

In einer Ausführungsform enthält die hierin beschriebene keramische Mischung zusätzlich als Komponente (e) mindestens ein Bindemittel und/oder als Komponente (f) mindestens ein Konservierungsmittel und/oder als Komponente (g) mindestens einen Weichmacher und/oder als Komponente h) mindestens ein Antitrocknungsmittel enthält.

Darüber hinaus wird ein Verfahren zur Herstellung einer keramischen Mischung hierin definiert, die zur Herstellung von Formkörpern, insbesondere zur Herstellung von dentalen Formkörpern, geeignet ist, umfassend die folgenden Schritte:
(a) Zugeben eines Dispergiermittels zu einem Lösungsmittel;
(b) Herstellen einer Suspension eines ungefärbten und/oder eines gefärbten keramischen Pulvers und/oder eines keramischen Granulats und/oder einer Kombination davon durch Zugeben eines ungefärbten und/oder eines gefärbten keramischen Pulvers und/oder eines keramischen Granulats und/oder einer Kombination davon zu der nach Schritt (a) erhaltenen Lösung eines Dispergiermittels;
(c) Herstellen einer wässrigen Lösung mindestens eines Hydrokolloids;
(d) Zugeben der nach Schritt (c) erhaltenen wässrigen Lösung mindestens eines Hydrokolloids zu der nach Schritt (b) erhaltenen Suspension, so dass eine wässrige kolloidale keramische Suspension erhalten wird; und
(e) Reduzieren des Lösungsmittelgehalts der nach Schritt (d) erhaltenen wässrigen kolloidalen keramischen Suspension, so dass eine keramische Mischung erhalten wird.

In einer Ausführungsform handelt es sich bei der nach dem offenbarten Verfahren erhaltenen keramischen Mischung um eine kolloidale keramische Mischung, vorzugsweise um eine kolloidale keramische Paste.

Ferner betrifft die vorliegende Offenbarung eine keramische Mischung erhältlich nach einem hierin beschriebenen Verfahren, vorzugsweise eine kolloidale keramische Mischung.

In einer besonders bevorzugten Ausführungsform betrifft die vorliegende Offenbarung eine kolloidale keramische Paste erhältlich nach einem hierin beschriebenen Verfahren.

Darüber hinaus betrifft die vorliegende Erfindung die Verwendung einer hierin beschriebenen keramischen Mischung zur Herstellung von dentalen Formkörpern, vorzugsweise von Zahnrestaurationen, wie einem Inlay, Onlay, Veneer, einer Krone, Bracket, Brücke oder eines Gerüsts, Abutments oder Implantats.

Besonders bevorzugt ist die Herstellung von mono-materiellen oder multi-materiellen dentalen Formkörpern.

Ein weiterer Gegenstand der vorliegenden Erfindung ist ein Verfahren zur Herstellung eines dentalen Formkörpers umfassend die folgenden Schritte:
(a) Auftragen einer ersten keramischen Mischung auf einen Träger oder auf ein Positivmodell, wobei ein Formkörper erhalten wird;
(b) Verfestigen des so erhaltenen Formkörpers durch Gelbildung zu einem gelartigen Formkörper; und
(c) ggf. Wiederholen der Schritte (a) und (b) mit einer zweiten oder weiteren keramischen Mischung, die dieselbe oder eine andere Zusammensetzung wie die erste keramische Mischung hat;

wobei die keramische Mischung die folgenden Komponenten enthält: ein ungefärbtes und/oder ein gefärbtes keramisches Pulver auf Basis von ZrO₂, Al₂O₃, Zirkoniumdioxid-verstärktem Aluminiumoxid (ZTA),Aluminiumoxid-verstärktem Zirkoniumoxid (ATZ), B₄C, SiC, oder Si₃N₄, wobei das ZrO₂ stabilisiert ist, und/oder ein ungefärbtes und/oder ein gefärbtes keramisches Granulat auf Basis von ZrO₂, Al₂O₃, Zirkoniumdioxid-verstärktem Aluminiumoxid (ZTA), Aluminiumoxid-verstärktem Zirkoniumoxid (ATZ), B₄C, SiC, oder Si₃N₄, wobei das ZrO₂ stabilisiert ist, und/oder Kombinationen davon auf Basis von ZrO₂, Al₂O₃, Zirkoniumdioxid-verstärktem Aluminiumoxid (ZTA), Aluminiumoxid-verstärktem Zirkoniumoxid (ATZ), B₄C, SiC, oder Si₃N₄, wobei das ZrO₂ stabilisiert ist;
mindestens ein Dispergiermittel; mindestens ein Hydrokolloid ausgewählt aus der Gruppe von Carubin, Gellan, Hydroxypropylguar, Agarose, Carrageen, Alginat, Dextran, Stärke, Gummi arabicum, Galactomannane, Glucomannan, Xanthan, Scleroglucan, Caseinat, oder Mischungen davon; und mindestens ein Lösungsmittel.

In einer Ausführungsform des erfindungsgemäßen Verfahrens erfolgt in Schritt (a) das Auftragen einer keramischen Mischung, vorzugsweise einer kolloidalen keramischen Paste, auf generierte Positivmodelle durch Materialablage,
(a1) vorzugsweise mit einem Spritzen-Stempel-System und/oder mit einem Extruder-System; und/oder
(a2) vorzugsweise wird die Oberfläche des Positivmodells zusätzlich mit einem Trennmittel versehen, damit sich der ausgehärtete Formkörper leichter von der Oberfläche des Positivmodells entfernen lässt, und/oder
(a3) vorzugsweise erfolgt das Auftragen kontinuierlich, und/oder
(a4) vorzugsweise werden Schichten mit einer Dicke von 0,01 mm bis 5 mm aufgetragen.

In einer Ausführungsform des erfindungsgemäßen Verfahrens erfolgt in Schritt (b) das Verfestigen des keramischen Formkörpers mittels Gelbildung durch Zugeben einer Metallsalzlösung, durch Einstellung einer bestimmten Temperatur, und/oder durch *in situ* Gelierung.

In einer Ausführungsform des erfindungsgemäßen Verfahrens wird in Schritt (b) das Verfestigen des so erhaltenen Formkörpers durch Gelbildung durch einen oder mehrere der folgenden Schritte gestartet:
(b1) Benetzen einer hierin beschriebenen keramischen Mischung, vorzugsweise einer kolloidalen keramischen Paste, durch eine Spritze und/oder durch einen Extruder und/oder durch Verdüsung und/oder durch Eintauchen des Formkörpers in eine Metallsalzlösung; oder
(b2) Unterschreiten einer bestimmten Temperatur, wobei der Formkörper vorzugsweise kurzzeitig auf eine Temperatur von weniger als 35 °C abgekühlt wird; oder
(b3) Überschreiten einer bestimmten Temperatur, wobei der Formkörper vorzugsweise kurzzeitig auf eine Temperatur von größer als 35 °C erwärmt wird; oder
(b4) *in situ* Gelierung, wobei der Formkörper, der ein Kalziumsalz mit niedriger Löslichkeit enthält, mit einem Säuerungsmittel gemischt wird.

Darüber hinaus betrifft die vorliegende Erfindung einen gelartigen Formkörper erhältlich nach einem oben beschriebenen erfindungsgemäßen Verfahren. wobei es sich vorzugsweise um einen mono-materiellen oder multi-materiellen gelartigen dentalen Formkörper handelt.

In einer Ausführungsform enthält dieser gelartige Formkörper eine innere Schicht bestehend aus einem ersten Material, und eine aus einem anderen Material bestehenden äußeren Schicht.

In einer bevorzugten Ausführungsform handelt es sich um einen multi-materiellen gelartigen Formkörper aus einer Vielzahl von Schichten die vertikal und/oder horizontal aufgebaut sein können.

In einer Ausführungsform des erfindungsgemäßen Verfahrens wird der so erhaltene Formkörper in einem weiteren Schritt (d) mittels subtraktiver Verfahren im Grünzustand vor dem Sintern nachbearbeitet, vorzugsweise durch subtraktive Verfahren wie beispielsweise Abtrennen, Polieren, Schleifen und Fräsen.

Ein weiterer Gegenstand der vorliegenden Erfindung ist ein Verfahren zur Herstellung einer gedruckten Zahnrestauration, das folgende Schritte umfasst:
(d) Drucken oder Herausfräsen der gegebenenfalls beaufmaßten Zahnrestauration aus einem formstabilen Material, welches beim späteren Druckprozess als Positivmodell verwendet wird;
(e) Modellieren eines inneren Dentinkerns sowie einer äußeren Schmelzschicht anhand des gescannten Zahns über die CAD-Software oder durch virtuelle vordefinierte Zahnrestaurationen;
(f) Zerlegen der modellierten, gegebenenfalls beaufmaßten Zahnrestauration in horizontale Schichten;
(g) Erstellen von Bahn- und Frässtrategien für die Auftragung sowie spätere Abtragung der verwendeten (keramischen) Druckmaterialien;
(h) Auftragen eines hierin beschriebenen Trennmittels auf die entsprechend beaufmaßte, formstabile, Zahnrestauration;
(i) Drucken der virtuell erzeugten und in horizontale Schichten zerlegten Zahnrestauration auf dem vorher erzeugten beaufmaßten, formstabilen, Positivmodell nach dem Verfahren von Anspruch 9;
(j) Verfestigen der Zahnrestauration durch Gelbildung nach einem der in Anspruch 11 definierten Schritte (b1), (b2), (b3), oder (b4); und
(k) Trocknen der gedruckten Zahnrestauration.

Darüber hinaus betrifft die vorliegende Erfindung eine gedruckte Zahnrestauration, erhältlich nach dem oben beschriebenen Verfahren umfassend die Schritte (d), (e), (f), (g), (h), (i), (j), (k), (l) und (m).

### Kurze Beschreibung der Figuren

**Fig. 1** zeigt mehrere dentale Formkörper, d.h. drei unterschiedliche Zahnkronen, die nach dem erfindungsgemäßen Verfahren und einer subtraktiven Nachbearbeitung aus der erfindungsgemäßen keramischen Mischung mit Natriumalginat hergestellt wurden.
**Fig. 2** zeigt zwei Formkörper, d.h. zwei Plättchen, eines welches aus einer Standard ZrO₂-Ronde herausgefräst wurde (links) und eines, welches nach dem erfindungsgemäßen Verfahren aus einer erfindungsgemäßen keramischen Mischung mit Gelatine und Xanthan und einer anschließenden subtraktiven Nachbearbeitung hergestellt wurde (rechts).

### Ausführliche Beschreibung der Erfindung

### Definitionen

In der vorliegenden Anmeldung, einschließlich der Ansprüche, haben die nachfolgenden Begriffe folgende Bedeutungen.

Unter dem Begriff "Formkörper" wird ein Rohling bezeichnet, der weiterverarbeitet werden kann. Dabei wird unter dem Begriff "dentaler Formkörper" ein Rohling, insbesondere ein Grünkörper verstanden, der weiter zu einer Zahnrestauration geformt werden kann, oder der bereits selbst die Form einer Zahnrestauration hat.

Unter dem Begriff "mono-materieller Formkörper" wird ein Rohling verstanden, der aus einem Material hergestellt wurde. Im Sinne der vorliegenden Erfindung wird darunter ein Formkörper verstanden, der unter Verwendung der erfindungsgemäßen keramischen Mischung hergestellt wurde. Erfindungsgemäß kann ein mono-materieller Formkörper wie hierin beschrieben durch das wiederholte Auftragen derselben keramischen Mischung auf einen Träger oder auf ein Positivmodel und Verfestigen der keramischen Mischung erhalten werden.

Unter dem Begriff "multi-materieller Formkörper" wird ein Rohling verstanden, der aus mindestens zwei unterschiedlichen Materialien hergestellt wurde. Im Sinne der vorliegenden Erfindung wird darunter ein Formkörper verstanden, der aus mindestens zwei keramischen Mischungen hergestellt wurde, die sich in ihrer Zusammensetzung unterscheiden. Erfindungsgemäß kann ein multi-materieller Formkörper wie hierin beschrieben durch das Auftragen einer ersten keramischen Mischung auf einen Träger oder auf ein Positivmodel und Verfestigen der keramischen Mischung erhalten werden, und das Auftragen mindestens einer weiteren keramischen Mischung mit unterschiedlicher Zusammensetzung und deren Verfestigen erhalten werden.

Unter einem "gelartigen Formkörper" wird ein Rohling verstanden, der eine gelartige Konsistenz und eine gewisse Formstabilität hat.

Unter dem Begriff "Zahnrestauration" wird jedes zahnärztliche Restaurationsmaterial, das verwendet wird, um die Funktion, Integrität und Morphologie der fehlenden Zahnhartsubstanz wiederherzustellen, insbesondere ein Inlay, Onlay, Veneer, eine Krone, Bracket, eine Brücke oder ein Gerüst, Abutment oder Implantat verstanden.

Unter dem Begriff "Ronde" wird eine 3-dimensionale Scheibe verstanden, die aus einem Material hergestellt ist, aus dem eine Zahnrestauration hergestellt werden kann.

Unter dem Begriff "Plättchen" wird eine dünne Scheibe verstanden, die für Farbund Transluzenzmessungen verwendet wird.

Unter dem Begriff "Pulver" wird eine binderfreie, trockene, aus einer großen Anzahl feiner Partikel bestehende Masse verstanden, die frei fließen kann, wenn sie geschüttelt oder gekippt wird. In einer bevorzugten Ausführungsform handelt es sich um eine gefärbte und/oder ungefärbte binderfreie Pulvercharge und/oder um Masterbatches.

Unter dem Begriff "Masterbatch" wird ein stabilisiertes Zirkonoxid verstanden, das farbgebende Additive, bevorzugt farbgebende Metalloxide, enthalten kann. Vorzugsweise werden farbige Pulver verwendet. Farbige Pulver im Sinne der vorliegenden Erfindung sind insbesondere weiße, gelbe, pinke oder graue Pulver. Masterbatches in den Farben weiß, gelb, pink und grau sind käuflich erwerbbar. Bevorzugt verwendete Masterbatches sind käuflich erhältliche Pulver des Herstellers Tosoh, beispielsweise die mit 3 Mol% Yttriumoxid stabilisierten Zpex^{®} weiß, Zpex^{®}-yellow und Zpex^{®}-grau Varianten, die mit 4 Mol% Yttriumoxid stabilisierten Zpex^{®} 4 weiß, Zpex^{®}-yellow und Zpex^{®}-grau Varianten, sowie die mit 5 Mol% Yttriumoxid stabilisierten Zpex^{®} smile, Zpex^{®} Smile yellow, Zpex^{®} smile grey Varianten. Ein mit Erbiumoxid stabilisiertes Zpex^{®} pink ist universell für alle 4 Mol% und 5 Mol% Stabilisierungstypen als Färbemasterbatch einsetzbar. Masterbatches erhöhen die Prozesssicherheit und sind gut zu verarbeiten. Auch farbige Pulver und/oder Masterbatches anderer Hersteller können als Pulver und/oder Masterbatches verwendet werden.

Unter dem Begriff "kolloidale keramische Mischung" wird eine kolloidale Lösung auf Basis eines keramischen Pulvers verstanden, die aufgrund der Teilchengröße zwischen echten molekulardispersen Lösungen und grob dispersen Suspensionen stehen.

Unter dem Begriff "Hydrokolloid" wird eine Gruppe von Polysacchariden und Proteinen verstanden, die in Wasser oder wässrigen Lösungsmitteln als Kolloide in Lösung gehen und sich durch ein hohes Vermögen zur Gelbildung auszeichnen. Im Sinne der vorliegenden Erfindung werden unter dem Begriff "Hydrokolloid" somit "zur Gelbildung geeignete Hydrokolloide" verstanden. In der vorliegenden Erfindung wird das Hydrokolloid (c) als Gelbildner verwendet.

Unter den Begriffen "Farbe" und "farbig" werden Farbe, Helligkeit und Transluzenz eines Materials, Körpers oder einer Schicht verstanden. Erfindungsgemäss beziehen sich die Begriffe "Farbe" und "farbig" insbesondere auf die Helligkeit eines Materials, Körpers oder einer Schicht. Unter Farbveränderungen werden daher insbesondere Helligkeitsveränderungen verstanden.

Farben können z.B. durch ihren Lab-Wert charakterisiert werden, der auch als CIE L*a*b bezeichnet wird. Der CIELAB-Farbraum ist ein Farbraum, der 1976 von der Internationalen Beleuchtungskommission (CIE) definiert wurde. Alternativ können Farben auch durch einen in der Dentalindustrie gebräuchlichen Farbcode charakterisiert werden. Beispiele für solche Farbcodes sind der Vitapan classic(R) und der Vita 3D Master(R), beide von VITA Zahnfabrik H. Rauter GmbH & Co. KG, und der Chromascop(R) der Ivoclar Vivadent AG. Unter dem Begriff "VITA Zahnfarbe(n)" versteht man z.B. den graduellen 16 VITA classical A1-D4 Farbschlüssel zur exakten Bestimmung der Zahnfarbe und den 32 3D-Master Farbschlüssel VITA basic colors. Die Anordnung der Farben in der VITA classical-Farbfamilie ist wie folgt: A1, A2, A3, A3.5, A4 (rötlich-bräunlich), B1, B2, B3, B4 (rötlich-gelblich), C1, C2, C3, C4 (gräuliche Farbtöne), D2, D3, D4 (rötlich-grau).

Unter dem Begriff "Transluzenz" wird das Lichtdurchlässigkeitsvermögen eines Materials, z.B. eines Rohlings oder eines Dentalartikels, d.h. das Verhältnis von durchgelassener zu einfallender Lichtintensität verstanden.

Unter dem Begriff "maschinelle Bearbeitung" ist Fräsen, Schleifen, Schneiden, Schnitzen oder Formen eines Materials durch eine Maschine zu verstehen. Fräsen ist in der Regel schneller und kostengünstiger als Schleifen. Ein "bearbeitbarer Gegenstand" ist ein Gegenstand mit einer 3-dimensionalen Form und mit ausreichender Festigkeit, um bearbeitet zu werden.

Unter dem Begriff "Positivmodell" wird eine definierte Druckoberfläche verstanden.

Unter dem Begriff "Stützstruktur" werden auf dem Gebiet des 3D Drucks Strukturen verstanden, die Überhänge und andere Schwachstellen verstärken. Sie werden nach dem 3D Druck wieder entfernt. Stützstrukturen bestehen aus drei Komponenten: Raft, Gerüst und Berührungspunkten. Der Raft bildet eine Basis, die an der Konstruktionsplattform haftet. Das Gerüst geht aus dem Raft hervor und sichert ihr Teil beim Drucken. Berührungspunkte sind Bereiche, in denen sich Gerüst und Druck begegnen.

Unter dem Begriff "Standard 3D-Drucker" wird ein 3D-Drucker verstanden, der aufgrund eines gegebenenfalls modifizierten Druckkopfs in der Lage ist, pastenförmige Materialien zu verarbeiten, beispielsweise mittels der dem Fachmann bekannten 3D-Druckverfahren wie Fused Deposition Modeling (FDM), Robocasting-3D-Druck, Direct Ink Writing oder Liquid Deposition Modeling (LDM).

### Erfindungsgemäße keramische Mischung und Verfahren zu deren Herstellung

Wie oben ausgeführt wurde, ist keines der im Stand der Technik beschriebenen Ausgangsmaterialien, insbesondere nicht die oben beschriebenen Schlicker, Suspensionen oder Sole, und keines der bekannten additiven Verfahren für die technisch einfache und kostengünstige Herstellung von Formkörpern optimal geeignet, speziell nicht zur Herstellung von dentalen Formkörpern.

Es besteht daher ein Bedarf an alternativen, nicht oder zumindest weniger toxischen Ausgangsmaterialien, die für die Herstellung von Formkörpern geeignet sind. Die alternativen Ausgangsmaterialien sollten insbesondere zur Herstellung von dentalen Formkörpern, geeignet sein, die einen Farb-, Helligkeits- und Transluzenzgradienten aufweisen, der dem Farb-, Helligkeits- und Transluzenzgradienten eines natürlichen Zahns vergleichbar ist. Idealerweise sollten im finalen dentalen Formkörper keine Farb-, Helligkeits- oder Transluzenzübergänge erkennbar sein. Zudem sollte das Ausgangsmaterial möglichst die Herstellung von dentalen Formkörpern in einfachen additiven Verfahren mittels Standard 3D-Druckern erlauben. Darüber hinaus sollte die Einstellung der Farbe des dentalen Formkörpers auf einfache, kostengünstige Weise möglich sein.

Eine Aufgabe der vorliegenden Erfindung ist daher die Bereitstellung eines alternativen Ausgangsmaterials und eines Verfahrens zu dessen Herstellung, das die Produktion von Formkörpern, insbesondere von dentalen Formkörpern, mittels additiver Verfahren ermöglicht. Das Verfahren zur Herstellung der dentalen Formkörper sollte es ermöglichen, die chemischen und physikalischen Eigenschaften des Formkörpers in einer Dimension, in zwei Dimensionen oder in drei Dimensionen einzustellen. Idealerweise sollten das Ausgangsmaterial in 3D-Druckern einsetzbar sein, ohne die Nachteile der bekannten Ausgangsmaterialien zu haben.

Es wurde nun gefunden, dass diese Aufgabe durch eine keramische Mischung gelöst wird, die die folgenden Komponenten enthält:
(a) ein ungefärbtes und/oder ein gefärbtes keramisches Pulver und/oder ein ungefärbtes und/oder ein gefärbtes keramisches Granulat und/oder Kombinationen davon auf der Basis von ZrO₂, Al₂O₃, Zirkoniumdioxid-verstärktem Aluminiumoxid (ZTA), Aluminiumoxid-verstärktem Zirkoniumoxid (ATZ), B₄C, SiC, oder Si₃N₄, wobei das ZrO₂ jeweils stabilisiert ist;
(b) mindestens ein Dispergiermittel;
(c) mindestens ein Hydrokolloid, vorzugsweise mindestens ein Polysaccharid und/oder ein Protein; und
(d) mindestens ein Lösungsmittel.

Vorzugsweise wird als Komponente (c) ein zur Gelbildung geeignetes Hydrokolloid verwendet.

In einer bevorzugten Ausführungsform liegt die erfindungsgemäße keramische Mischung als kolloidale keramische Mischung vor. Besonders bevorzugt als kolloidale keramische Paste.

Überraschenderweise wurde festgestellt, dass die oben beschriebene keramische Mischung zur Herstellung von Formkörpern, insbesondere von dentalen Formkörpern, geeignet ist, und dass die Verwendung dieser keramischen Mischung die Herstellung von Formkörpern mit den für Zahnrestaurationen erforderlichen

Eigenschaften wie hohe Dichte, hohe Biegefestigkeit und hohe Transluzenz ermöglicht.

Die erfindungsgemäße keramische Mischung weist eine Reihe von Vorteilen auf. So ist die erfindungsgemäße keramische Mischung auch für die Herstellung von Formkörpern mittels additiver Verfahren geeignet. Es ist überraschend, dass die erfindungsgemäße keramische Mischung auch in kostengünstigen Standard 3D-Druckern verarbeitbar ist.

Im Gegensatz zu den aus EP 3 659 989 A1 bzw. US 2020/0172444 A1 bekannten Schlickern enthält die erfindungsgemäße keramische Mischung keine Energietransformationskomponente.

In einer bevorzugten Ausführungsform betrifft die vorliegende Erfindung daher eine keramische Mischung, die die folgenden Komponenten enthält:
(a) ein ungefärbtes und/oder ein gefärbtes keramisches Pulver und/oder ein ungefärbtes und/oder ein gefärbtes keramisches Granulat und/oder Kombinationen davon auf der Basis von ZrO₂, Al₂O₃, Zirkoniumdioxid-verstärktem Aluminiumoxid (ZTA), Aluminiumoxid-verstärktem Zirkoniumoxid (ATZ), B₄C, SiC, oder Si₃N₄, wobei das ZrO₂ jeweils stabilisiert ist;
(b) mindestens ein Dispergiermittel;
(c) mindestens ein Hydrokolloid, vorzugsweise mindestens ein Polysaccharid und/oder ein Protein; und
(d) mindestens ein Lösungsmittel,
wobei die keramische Mischung keine Energietransformationskomponente enthält.

Ein weiterer Vorteil der erfindungsgemäßen keramischen Mischung ist, dass diese im Gegensatz zu den oben beschriebenen bekannten Ausgangsmaterialien nicht toxisch ist.

Überraschenderweise wurde festgestellt, dass die Verwendung einer erfindungsgemäßen keramischen Mischung, die vorzugsweise als Komponente (c) eine Kombination aus mindestens zwei Hydrokolloiden enthält, zu Formkörpern führt, die sich in Eigenschaften wie Dichte, und vor allem der Transluzenz kaum von einem aus einer gepressten Ronde oder einem Block herausgefrästen Formkörper unterscheidet.

Ein signifikanter Vorteil der erfindungsgemäßen keramischen Mischung ist, dass keine zusätzlichen farbgebenden Komponenten benötigt werden, um eine Farbeinstellung vorzunehmen. Die erfindungsgemäße keramische Mischung ermöglicht die Einstellung der Farbe des dentalen Formkörpers auf einfache und kostengünstige Weise, da die Farbe durch gezielte Auswahl von gefärbten Pulvern und/oder Granulaten als Edukt auf einfache Weise ohne Aufwand nach Belieben eingestellt werden kann. Besonders vorteilhaft ist, dass auf Basis der erfindungsgemäßen Mischung Farbe, Helligkeit und Transluzenz von dentalen Formkörpern in einer Dimension, in zwei Dimensionen oder in drei Dimensionen variiert werden können.

Die erfindungsgemäße keramische Mischung kann ein ungefärbtes oder ein gefärbtes keramisches Pulver oder Granulat enthalten, so dass die Farbe der keramischen Mischung gezielt eingestellt werden kann. Zur Herstellung der Formkörper müssen daher nicht zusätzlich farbgebende Komponenten zugesetzt werden. Beispielsweise kann durch die Verwendung von gefärbten keramischen Pulvern als Komponente (a) der keramischen Mischung die erfindungsgemäße keramische Mischung für die innere Dentinschicht verwendet werden, und ein sich anschließender Farbgradient durch lokales Abtragen der farblosen, höhertransluzenteren Schmelzschicht eingestellt werden.

Die Dichte der nach dem erfindungsgemäßen Verfahren erhaltenen, vorzugsweise gedruckten Formkörper beträgt überraschenderweise stets mehr als 99%. Die Dichte wurde jeweils nach der dem Fachmann bekannten Archimedes-Methode bei Raumtemperatur (d.h. ca. 25 °C) gemessen.

Die Festigkeit der nach dem erfindungsgemäßen Verfahren erhaltenen, vorzugsweise gedruckten Formkörper ist abhängig von dem verwendeten stabilisierten Zirkonoxid (ZrO₂). Sie beträgt beispielsweise bei Verwendung von 5 Mol% Yttriumoxid stabilisiertem ZrO₂ über 660 MPa. Die Festigkeit wurde nach der dem Fachmann bekannten ball-on-three-Ball-Methode gemessen.

Die Transluzenz der nach dem erfindungsgemäßen Verfahren erhaltenen, vorzugsweise gedruckten Formkörper ist abhängig von dem verwendeten stabilisierten Zirkonoxid (ZrO₂). Sie beträgt überraschenderweise (abhängig vom verwendeten stabilisierten ZrO₂) beispielsweise bei Verwendung von gefärbtem 5 Mol% Yttriumoxid stabilisiertem ZrO₂ stets über 30 %). Die Transluzenz wurde im CIELAB-Farbraum über schwarzem und weißem Hintergrund gemessen und entspricht 1 - Opazität.

Die reziproke Eigenschaft der Transluzenz ist die Opazität (O). O=1/T=I/I0 (T=Transmission, I=Intensität des durchgelassenen Lichts, I=Intensität des Lichts vor der Permeation). Somit werden Opazitätswerte kleiner als etwa 0,9 für ein 1 mm dicke Plättchen mit einem Durchmesser von 15 mm als durchscheinend betrachtet.

In einer besonders bevorzugten Ausführungsform handelt es sich bei der Komponente (a) um ein ungefärbtes und/oder um ein gefärbtes Pulver.

In einer Ausführungsform der hierin beschriebenen keramischen Mischung enthält die Komponente (a) ein keramisches Pulver und/oder ein keramisches Granulat auf Basis von ZrO₂, Al₂O₃, ZTA, oder ATZ, wobei das ZrO₂ jeweils mit CaO, Y₂O₃, La₂O₃, CeO₂, MgO, Er₂O₃, Pr₂O₃ und/oder Nb₂O₅ stabilisiert ist, besonders bevorzugt auf Basis von stabilisiertem ZrO₂. Bevorzugt als Komponente (a) ist ein keramisches Pulver auf Basis von Y₂O₃ stabilisiertem ZrO₂, oder auf Basis von Y₂O₃ und Er₂O₃ Stabilisiertem ZrO₂. Ganz besonders bevorzugt als Komponente (a) ist ein keramisches Pulver auf Basis von Y₂O₃ stabilisiertem ZrO₂.

Die Partikelgröße der Komponente (a) ist abhängig von der Basis des keramischen Pulvers und/oder Granulats. Bei ZrO₂, z.B. bei TZP-Y3 ZrO₂ liegt die Partikelgröße im Bereich von 5 nm bis 500 nm, vorzugsweise im Bereich von 20 bis 300 nm. Bei Al₂O₃ liegt die Partikelgröße im Bereich von 50 nm bis 500 nm, bevorzugt im Bereich von 75 bis 300 nm.

Bei den Farben der gefärbten keramischen Pulver und/oder Granulaten handelt es sich um dentale Zahnfarben gemäß denen in der Dentalindustrie gebräuchlichen Farbcodes, wie z.B. der Vitapan classic(R) oder der Vita 3D Master(R), beide von der VITA Zahnfabrik H. Rauter GmbH & Co. KG, oder der Chromascop(R) der Ivoclar Vivadent AG. Die Zahnmodelle dieser Farbcodes definieren jeweils nur eine Farbe, sind aber ähnlich wie Zähne aus Schichten unterschiedlicher Materialmischungen und/oder Farben und/oder Transluzenz aufgebaut und orientieren sich an den unterschiedlichen Farben der menschlichen Zähne.

In einer bevorzugten Ausführungsform werden als Komponente (a) yttriumbasierte Zirkonoxidpulver verwendet, die auf Yttriumoxid stabilisierten Zirkonoxidpulvern des Herstellers Tosoh basieren, wie sie im Technischen Datenblatt von Zpex^{®} (3 Mol% Yttriumoxid stabilisiertes Zirkonoxid), Zpex^{®}4 (4 Mol% Yttriumoxid stabilisiertes Zirkonoxid), Zpex^{®}smile (5 Mol% Yttriumoxid stabilisiertes Zirkonoxid), beschrieben sind. Die Zirkondioxid-Pulver bestehen aus Zirkondioxid (ZrO₂, auch als "Zirkonoxid" bezeichnet), das durch die Zugabe von Mengen an Yttriumoxid (Y₂O₃, "Yttria, Yttrium") stabilisiert wird. Als Ergebnis der Zugabe von Yttriumoxid erhält man Yttriumoxid-stabilisiertes tetragonales und kubisches Zirkoniumoxid.

In einer Ausführungsform enthalten die gefärbten keramischen Pulver und/oder keramischen Granulate als farbgebende Komponente Er₂O₃, Fe₂O₃, Co₃O₄, MnO₂, NiO₂, Cr₂O₃, Pr₂O₃, Tb₂O₃ und/oder Bi₂O₃. Im Allgemeinen entstehen die unterschiedlichen Zahnfarben vorzugsweise durch Zugabe der folgenden farbgebenden Oxide, wobei die Gesamtmenge der farbgebenden Oxide in den Pulvermischungen weniger als 0,7 Gew.-% beträgt:
Gelb: Fe₂O₃ (0,035-0,12 Gew.-% %)
Pink: Er₂O₃ (0,0% -0,6 wt.%)
Grau: Co₃O₄ oder MnO₂ (≤0,00007 Gew.-%)
   Mn₂O₃ und/oder Mn₃O₄ (≤ 0,002 Gew.-%)

In einer weiter bevorzugten Ausführungsform werden Co₃O₄, Mn₂O₃ und/oder Mn₃O₄ als farbgebende Metalloxide verwendet, um eine graue Farbe einzustellen. Co₃O₄ ist besonders bevorzugt.

In einer bevorzugten Ausführungsform werden als gefärbte keramische Pulver kommerziell erhältliche Masterbatches verwendet. Mit diesen kann jede gewünschte Farbe der keramischen Mischung gezielt hergestellt werden. Als Masterbatches werden vorzugsweise käuflich erhältliche Pulver des Herstellers Tosoh, beispielsweise die mit 3 Mol% Yttriumoxid stabilisierten Zpex^{®} weiß, Zpex^{®}-yellow und Zpex^{®}-grau Varianten, die mit 4 Mol% Yttriumoxid stabilisierten Zpex^{®} 4 weiß, Zpex^{®}-yellow und Zpex^{®}-grau Varianten, sowie die mit 5 Mol% Yttriumoxid stabilisierten Zpex^{®} smile, Zpex^{®} Smile yellow, Zpex^{®} smile grey Varianten. Ein mit Erbiumoxid stabilisiertes Zpex^{®} pink ist universell für alle 4 Mol% und 5 Mol% Stabilisierungstypen als Färbemasterbatch einsetzbar. Masterbatches erhöhen die Prozesssicherheit und sind gut zu verarbeiten.

In einer Ausführungsform enthält die hierin beschriebene keramische Mischung von 35 Gew.-% bis 99 Gew.-% bezogen auf die Masse der gesamten keramischen Mischung, vorzugsweise von 75 Gew.-% bis 95 Gew.-% der Komponente (a), z.B. von 40 Gew.-% bis 99 Gew.-%, 45 Gew.-% bis 99 Gew.-%, 50 Gew.-% bis 98 Gew.-%, 55 Gew.-% bis 98 Gew.-%, 60 Gew.-% bis 97 Gew.-%, 65 Gew.-% bis 97 Gew.-%, 70 Gew.-% bis 96 Gew.-%, 76 Gew.-% bis 96 Gew.-%, 77 Gew.% bis 95 Gew.% oder 80 Gew.% bis 95 Gew.% der Komponente (a). Besonders bevorzugt enthält die hierin beschriebene keramische Mischung von 76 Gew.% bis 95 Gew.% der Komponente (a).

In einer Ausführungsform enthalt die hierin beschriebene keramische Mischung als Dispergiermittel (b) Aminoalkohole, wie Ethanolamin, Carbonsäuren, wie Maleinsäure und Citronensäure, Carbonsäuresalze, oder vinyloge Carbonsäuren, wie Ascorbinsäure, und Salze davon, sowie Mischungen davon, vorzugsweise mindestens ein Dispergiermittel ausgewählt aus Ethanolamin, Citronensäure, Citronensäuresalzen und Ascorbinsäure. Bevorzugt werden Alkali- oder Ammoniumsalze der Citronensäure verwendet. Besonders bevorzugt sind L-Ascorbinsäure und Diammoniumhydrogencitrat.

Weiter bevorzugt sind Citronensäuresalze, bei denen zwei der drei Carboxyl-Gruppen mit Ammoniumionen als Gegenionen assoziiert sind.

In einer bevorzugten Ausführungsform enthalt die hierin beschriebene keramische Mischung von 0,01 Gew. % bis 15 Gew.% des Dispergiermittels, z.B. von 0,03 Gew.% bis 14 Gew.%, von 0,05 Gew.% bis 13 Gew.%, von 0,07 Gew.% bis 12 Gew.%, von 0,09 Gew.% bis 11 Gew.%, von 0,1 Gew.% bis 10 Gew.% des Dispergiermittels bezogen auf das Gewicht der sinterfähigen Teilchen, d.h. bezogen auf das Gewicht des ungefärbten oder gefärbten keramischen Pulvers.

In einer Ausführungsform enthält die hierin beschriebene keramische Mischung mindestens ein Hydrokolloid (c) ausgewählt aus der Gruppe von Gellan, Hydroxypropylguar, Caseinat, Agarose, Carrageen, Alginat, Xanthan, Dextran, Scleroglucan, Starke, Gummi arabicum, Galactomannane, Glucomannan, und Carubin, oder Mischungen davon.

Bevorzugt handelt es sich bei dem Hydrokolloid um Carrageen, Alginat, Xanthan, Stärke und/oder Glucomann, oder Mischungen davon.

In einer bevorzugten Ausführungsform enthalt die hierin beschriebene keramische Mischung als Hydrokolloid (c) ein Alginat. Als Alginate kommen alle kommerziell erhältlichen Alginate bzw. deren Salze in Frage. Das Alginat kann beispielsweise als Natriumalginat oder als Kaliumalginat vorliegen.

In einer bevorzugten Ausführungsform enthält die hierin beschriebene keramische Mischung als Komponente (c) eine Kombination aus zwei, drei, vier oder fünf Hydrokolloiden.

In einer bevorzugten Ausführungsform enthält die hierin beschriebene keramische Mischung als Komponente (c) eine Kombination aus zwei Hydrokolloiden.

In einer besonders bevorzugten Ausführungsform enthält die hierin beschriebene keramische Mischung als Komponente (c) eine Kombination aus den Hydrokolloiden Alginat und Pektin. Das Alginat kann beispielsweise als Natriumalginat oder als Kaliumalginat vorliegen.

In einer weiteren besonders bevorzugten Ausführungsform enthält die hierin beschriebene keramische Mischung als Komponente (c) eine Kombination aus den Hydrokolloiden Gelatine und Xanthan.

In einer bevorzugten Ausführungsform enthält die hierin beschriebene keramische Mischung von 0,001 Gew.% bis 15 Gew.% des Hydrokolloids bzw. einer Kombination von Hydrokolloiden, z.B. von 0,003 Gew.% bis 14 Gew.%, von 0,005 Gew.% bis 13 Gew.%, von 0,007 Gew.% bis 12 Gew.%, von 0,009 Gew.% bis 11Gew.%, von 0,01 Gew.% bis 10 Gew.% des Hydrokolloids bzw. einer Kombination von Hydrokolloiden bezogen auf das Gewicht der sinterfähigen Teilchen, d.h. bezogen auf das Gewicht des ungefärbten oder gefärbten keramischen Pulvers.

In einer Ausführungsform enthält die hierin beschriebene keramische Mischung mindestens ein Lösungsmittel (d).

Als Lösungsmittel (d) kommen alle handelsüblichen organischen Lösungsmittel in Frage. Geeignete Lösungsmittel sind beispielsweise Essigsäurebutylester, Essigsäure-n-hexylester. Bevorzugte niedrigsiedende Lösungsmittel sind 1-Octanol, Propylenglycoldiacetat, Ethylenglycoldiacetat, Aceton, Methylethylketon (MEK), Isopropanol, Ethanol, Butanol, p-Xylol, Cyclohexanon, Butylacetat, Pentylacetat, Hexylacetat und Wasser, besonders bevorzugt Wasser.

Als hochsiedende Komponenten kommen Lösungsmittel mit einem Siedepunkt von über 200°C (unter Normaldruck) in Frage. Bevorzugte hochsiedende Lösungsmittel sind flüssige Polyethylenglycole mit einem Molekulargewicht zwischen 150 bis 600 g/mol, Propylenglykol, Dipropylenglykol, Tripropylenglykol, Poly(propylglycole) mit einem Molekulargewicht von 150 bis 4000 g/mol, besonders bevorzugt mit einem Molekulargewicht von 150 bis 600 g/mol, deren Ether wie die Methyl-, Ethyl-, Propyl-, Isopropyl-, Butyl-, Hexylether, entweder als Mono- oder Diether; Phthalate, wie Dimethyl-, Diethyl-, Di-butylphthalate; Glycerin; Dimethyl-, Diethyl-, Dipropyl-, Dibutyladipate oder Glutarate; Diethylsuccinat; Acetyltri-n-butyl citrat.

Zur Kombination mit Wasser eignen sich besonders polare hochsiedende Lösungsmittel wie PEG (mittleres Molekulargewicht < 600g/mol), Glycerin und 1,2-Propandiol.

Die keramische Mischung kann zusätzlich als Komponente (e) mindestens ein Bindemittel enthalten.

Erfindungsgemäß sind keramische Mischungen bevorzugt, die nicht reaktives Bindemittel enthalten, d.h. Bindemittel, das nicht radikalisch polymerisierbar ist. Im Gegensatz zu reaktiven Bindemitteln bilden nicht reaktive Bindemittel bei der Härtung kein kovalentes Polymernetzwerk. Deswegen können sich die Keramikpartikel der Komponente (a) relativ zueinander verschieben und so Spannungen während des Trocknens und/oder Entbinderns teilweise abbauen.

Bevorzugt sind Bindemittel, die in reiner Form bei 25°C fest sind. Während des Trocknungsprozesses erstarren derartige Bindemittel und sorgen für eine bessere Festigkeit des Grünkörpers.

Als bevorzugte Bindemittel kommen Cellulosederivate wie Methyl-(MC), Hydroxyethyl- (HEC), Hydroxypropylmethyl- (HPMC) und Hydroxybutylmethylcellulose (HBMC) sowie Natriumcarboxymethylcellulose (NaCMC) in Frage. Weitere bevorzugte Bindemittel sind Poly(vinylalkohol) (PVA), Poly(vinylacetat) (PVAc), Poly(vinylpyrrolidon) (PVP), Poly-(acrylsäure) (PAA), Copolymere von Acrylsäureester und Acrylsäure (AE/AA), Poly(ethylacrylat) (PEA), Poly(methacrylsäure) (PMAA), Poly(methylmethacrylat) (PMMA), Ammoniumpolyacrylat (NH₄PA), Ammoniumpoly(methacrylat), Poly(acryl amide), Gelatine und Poly(ethylenglycol) (HO-(CH₂CH₂O)ₙ-OH) und Mischpolymere von Ethylenglycol und Propylenglycol, die ein so hohes Molekulargewicht und/oder einen so hohen PEG-Anteil aufweisen, dass sie bei Raumtemperatur fest sind. Der Polymerisationsgrad n ergibt sich auch hier aus den unten definierten Molekulargewichten.

Bevorzugt sind Bindemittel, die ein Molekulargewicht von 1000 g/mol bis 500.000 g/mol, bevorzugt von 3000 g/mol bis 200.000g/mol, besonders bevorzugt von 5000 g/mol bis 100.000 g/mol haben.

Bei Poly(ethylen glycol), Poly(proyplen glycol) und Mischpolymeren von Ethylenglycol und Propylenglycol wird die mittlere Molmasse Mw angegeben, die aus der nach ASTM D4274 gemessenen Hydroxyl-Zahl errechnet wird. Bei anderen Polymeren handelt es sich, wenn nicht anders angegeben, um die durch Viskosimetrie bestimmte Molmasse Mη (Viskositätsmittel) nach Ubbelohde.

Neben ihrem Einsatz als Bindemittel, können Polyethylenglycol und Polypropylenglycol auch als Plastifizierer bzw. Weichmacher verwendet werden.

Zeigen das Bindemittel und das Dispergiermedium eine starke Interaktion, wie z.B. bei polaren Bindemitteln und Wasser, kann diese Interaktion eine Verlangsamung des Trocknungsprozesses bewirken, so dass nach dem Trocknen noch Reste des Dispergiermediums vorhanden sind. Durch Art und Menge des Bindemittels kann so die Trocknungskinetik an den Prozess angepasst werden.

Das Bindemittel wird vorzugsweise so auf das Dispergiermedium und die Partikel des keramischen Pulvers und/oder Granulats abgestimmt, dass eine homogene, stabile Suspension erhalten wird, d.h., dass vorzugsweise keine Flokkulation stattfindet. Die Stabilität der Suspension kann gemäß E.J.W. Verwey, J.Th.G. Overbeek: Theory of the stability of lyophobic colloids, Elsevier, New York 1948 bestimmt werden.

Das Bindemittel (e) kann im Dispergiermedium (d) in Form kleiner Partikel dispergiert sein (sogenannte Dispersionsbinder), vorzugweise ist das Bindemittel (e) aber im Dispergiermedium (d) gelöst.

In einer bevorzugten Ausführungsform enthält die keramische Mischung kein Bindemittel (e).

Die erfindungsgemäße keramische Mischung kann zudem als Komponente (f) handelsübliche Konservierungsstoffe enthalten.

Die erfindungsgemäße keramische Mischung kann zudem als Komponente (g) einen Weichmacher enthalten. Hierbei kommen handelsübliche Weichmacher, wie beispielsweise Polyethylenglycol und/oder Polypropylenglycol in Frage.

Die erfindungsgemäße keramische Mischung kann zudem als Komponente (h) ein Antitrocknungsmittel enthalten. Hierbei kommen handelsübliche Antitrocknungsmittel, wie beispielsweise Ethylenglycol und/oder Glycerin in Frage.

Die Gesamtmenge aller Komponenten (a), (b), (c) und (d) und ggf. der Komponenten (e), (f), (g) und (h) beträgt 100 Gew.%.

Die erfindungsgemäße keramische Mischung hat vorzugsweise die in Tabelle 1 genannten Zusammensetzungen:

**Tabelle 1: Bevorzugte Zusammensetzungen der erfindungsgemäßen keramischen Mischung**

| **Komponente** | **Bevorzugte keramische Mischung; Anteil der Komponente in Gew.%** | **Weiterevorzugte keramische Mischung; Anteil der Komponente in Gew.%** | **Besonders bevorzugte keramische Mischung; Anteil der Komponente in Gew.%** |
|---|---|---|---|
| Gefärbtes/ungefärbtes keramisches Pulver (a) | 35-99 | 55-98 | 75-95 |
| Dispergiermittel* (b) | 0,01-15 | 0,05-13 | 0,1-10 |
| Hydrokolloid* (c) | 0,001-15 | 0,005-13 | 0,01-10 |
| Lösungsmittel (d) | 1-65 | 2-45 | 5-35 |

| | | | |
|---|---|---|---|
| *bezogen auf das Gewicht der sinterfähigen Komponente d.h. bezogen auf das Gewicht des ungefärbten oder gefärbten keramischen Pulvers. | | | |

Darüber hinaus betrifft die vorliegende Erfindung ein Verfahren zur Herstellung einer keramischen Mischung wie hierin definiert, die zur Herstellung von Formkörpern, insbesondere zur Herstellung von dentalen Formkörpern, geeignet ist, das die folgenden Schritte umfasst:
(a) Zugeben eines Dispergiermittels zu einem Lösungsmittel;
(b) Herstellen einer Suspension eines ungefärbten und/oder eines gefärbten keramischen Pulvers und/oder eines keramischen Granulats und/oder einer Kombination davon durch Zugeben eines ungefärbten und/oder eines gefärbten keramischen Pulvers und/oder eines keramischen Granulats und/oder einer Kombination davon zu der nach Schritt (a) erhaltenen Lösung eines Dispergiermittels;
(c) Herstellen einer wässrigen Lösung mindestens eines Hydrokolloids;
(d) Zugeben der nach Schritt (c) erhaltenen wässrigen Lösung mindestens eines Hydrokolloids zu der nach Schritt (b) erhaltenen Suspension, so dass eine wässrige kolloidale keramische Suspension erhalten wird; und
(e) Reduzieren des Lösungsmittelgehalts der nach Schritt (d) erhaltenen wässrigen kolloidalen keramischen Suspension, so dass eine keramische Mischung erhalten wird.

Ein Vorteil des erfindungsgemäßen Verfahrens ist, dass die nach diesem Verfahren erhaltene keramische Mischung ohne weitere Aufarbeitung als Ausgangsmaterial in additiven Verfahren zur Herstellung von Formkörpern eingesetzt werden kann.

Alle zur Herstellung der erfindungsgemäßen keramischen Mischung verwendeten Komponenten sind käuflich erwerbbar.

In Schritt (a) wird ein oben beschriebenes Dispergiermittel zu einem Lösungsmittel gegeben. Als Lösungsmittel kommen alle handelsüblichen organischen Lösungsmittel in Frage. Geeignete Lösungsmittel sind beispielsweise Essigsäurebutylester, Essigsäure-n-hexylester. Bevorzugte niedrigsiedende Lösungsmittel sind 1-Octanol, Propylenglycoldiacetat, Ethylenglycoldiacetat, Aceton, Methylethylketon (MEK), Isopropanol, Ethanol, Butanol, p-Xylol, Cyclohexanon, Butylacetat, Pentylacetat, Hexylacetat und Wasser, besonders bevorzugt Wasser.

Als hochsiedende Komponenten kommen Lösungsmittel mit einem Siedepunkt von über 200°C (unter Normaldruck) in Frage. Bevorzugte hochsiedende Lösungsmittel sind flüssige Polyethylenglycole mit einem Molekulargewicht zwischen 150 bis 600 g/mol, Propylenglykol, Dipropylenglykol, Tripropylenglykol, Poly(propylglycole) mit einem Molekulargewicht von 150 bis 4000 g/mol, besonders bevorzugt mit einem Molekulargewicht von 150 bis 600 g/mol, deren Ether wie die Methyl-, Ethyl-, Propyl-, Isopropyl-, Butyl-, Hexylether, entweder als Mono- oder Diether; Phthalate, wie Dimethyl-, Diethyl-, Di-butylphthalate; Glycerin; Dimethyl-, Diethyl-, Dipropyl-, Dibutyladipate oder Glutarate; Diethylsuccinat; Acetyltri-n-butyl citrat.

Zur Kombination mit Wasser eignen sich besonders polare hochsiedende Lösungsmittel wie PEG (mittleres Molekulargewicht < 600g/mol), Glycerin und 1,2-Propandiol.

In Schritt (d) erhält die nach Schritt (b) erhaltene Suspension durch Zugabe der wässrigen Lösung aus Schritt (c) die Fähigkeit zur Gelbildung, und kann damit von einem flüssigen bzw. pastösen Zustand in einen festen bzw. gelartigen Zustand überführt werden.

In Schritt (e) wird der Lösungsmittelgehalt der nach Schritt (d) erhaltenen wässrigen kolloidalen keramischen Suspension auf einen Gehalt von 1 Gew.% bis 60 Gew.%, vorzugsweise auf 2 Gew.% bis 45 Gew.%, weiter bevorzugt auf 2 Gew.% bis 35 Gew.%, besonders bevorzugt auf 5 Gew.% 35 % und ganz besonders bevorzugt auf 5 Gew.% bis 24 Gew.% reduziert. Die Reduzierung des Lösungsmittelgehalts kann dabei durch eine Heizplatte unter ständigem Rühren, durch Bestrahlung mir Infrarotlicht, durch den Einfluss von Mikrowellen, durch den Einfluss von Heizelementen oder durch langsame Evaporation des Lösungsmittels in einem Trocken-/ Klimaschrank unter bestimmten Bedingungen geschehen.

Als Verfahrensprodukt des oben beschriebenen Verfahrens wird die erfindungsgemäße keramische Mischung erhalten, die vorzugsweise als kolloidale keramische Mischung vorliegt. In einer besonders bevorzugten Ausführungsform der keramischen Mischung handelt es sich um eine kolloidale keramische Paste.

Ein weiterer Gegenstand der Erfindung ist eine keramische Mischung erhältlich nach einem oben beschriebenen Verfahren.

Die keramische Mischung, insbesondere die kolloidale keramische Mischung der vorliegenden Erfindung eignet sich als Ausgangsmaterial zur Herstellung von Formkörpern, vorzugsweise zur Herstellung von dentalen Formkörpern, vorzugsweise von Zahnrestaurationen, wie einem Inlay, Onlay, Veneer, einer Krone, Bracket, Brücke oder eines Gerüsts, Abutments oder Implantats.

### Erfindungsgemäßes Verfahren zur Herstellung eines Formkörpers, insbesondere eines dentalen Formkörpers

Eine weitere Aufgabe der Erfindung ist die Bereitstellung eines vereinfachten additiven Verfahrens zur Herstellung von Formkörpern, insbesondere von dentalen Formkörpern das weniger Nachteile als die oben beschriebenen additiven Verfahren hat. Darüber hinaus sollte das Verfahren es ermöglichen, die chemischen und physikalischen Eigenschaften des Formkörpers in einer Dimension, in zwei Dimensionen oder in drei Dimensionen zu variieren.

Diese Aufgabe wird durch ein Verfahren zur Herstellung eines dentalen Formkörpers gelöst, umfassend die folgenden Schritte:
(a) Auftragen einer ersten keramischen Mischung auf einen Träger oder auf ein Positivmodell, wobei ein Formkörper erhalten wird;
(b) Verfestigen des so erhaltenen Formkörpers durch Gelbildung zu einem gelartigen Formkörper; und
(c) ggf. Wiederholen der Schritte (a) und (b) mit einer zweiten oder weiteren keramischen Mischung, die dieselbe oder eine andere Zusammensetzung wie die erste keramische Mischung hat;

wobei die keramische Mischung die folgenden Komponenten enthalt: ein ungefärbtes und/oder ein gefärbtes keramisches Pulver auf Basis von ZrO₂, Al₂O₃, Zirkoniumdioxid-verstärktem Aluminiumoxid (ZTA),Aluminiumoxid-verstärktem Zirkoniumoxid (ATZ), B₄C, SiC, oder Si₃N₄, wobei das ZrO₂ stabilisiert ist, und/oder ein ungefärbtes und/oder ein gefärbtes keramisches Granulat auf Basis von ZrO₂, Al₂O₃, Zirkoniumdioxid-verstärktem Aluminiumoxid (ZTA), Aluminiumoxid-verstärktem Zirkoniumoxid (ATZ), B₄C, SiC, oder Si₃N₄, wobei das ZrO₂ stabilisiert ist, und/oder Kombinationen davon auf Basis von ZrO₂, Al₂O₃, Zirkoniumdioxid-verstärktem Aluminiumoxid (ZTA), Aluminiumoxid-verstärktem Zirkoniumoxid (ATZ), B₄C, SiC, oder Si₃N₄, wobei das ZrO₂ stabilisiert ist;
mindestens ein Dispergiermittel; mindestens ein Hydrokolloid ausgewählt aus der Gruppe von Carubin, Gellan, Hydroxypropylguar, Agarose, Carrageen, Alginat, Dextran, Stärke, Gummi arabicum, Galactomannane, Glucomannan, Xanthan, Scleroglucan, Caseinat, oder Mischungen davon; und
mindestens ein Lösungsmittel.

In einer Ausführungsform dieses Verfahrens wird zunächst Schritt (a), dann Schritt (b) durchgeführt.

In einer bevorzugten Ausführungsform dieses Verfahrens wird zunächst Schritt (a), dann Schritt (b) mit einer ersten erfindungsgemäßen keramischen Mischung durchgeführt. Anschließend werden die Schritte (a) und (b) mit einer zweiten erfindungsgemäßen keramischen Mischung durchgeführt, die eine andere Zusammensetzung hat als die erste erfindungsgemäße keramische Mischung. Danach werden die Schritte (a) und (b) mit einer dritten erfindungsgemäßen keramischen Mischung durchgeführt, die eine andere Zusammensetzung als die erste bzw. die zweite erfindungsgemäße keramische Mischung hat. Danach können die Schritte (a) und (b) mit weiteren erfindungsgemäßen keramischen Mischungen durchgeführt werden.

In einer alternativen Ausführungsform dieses Verfahren wird zunächst Schritt (a) einmal oder mehrfach wiederholt, dann wird Schritt (b) durchgeführt.

In einer bevorzugten Ausführungsform dieses Verfahrens kann zunächst Schritt (a) mit einer ersten erfindungsgemäßen keramischen Mischung durchgeführt werden. Anschließend kann Schritt (a) mit einer zweiten erfindungsgemäßen keramischen Mischung wiederholt werden. Danach kann Schritt (a) mit einer dritten und weiteren erfindungsgemäßen keramischen Mischung wiederholt werden. Danach wird Schritt (b) durchgeführt.

Überraschenderweise wurde gefunden, dass die Schichten des Formkörpers mit dem erfindungsgemäßen Verfahren horizontal und/oder vertikal aufgebaut werden können. Je nach Verfahrensführung können bei Verwendung von mindestens zwei keramischen Mischungen die chemischen und physikalischen Eigenschaften in einer Dimension, in zwei Dimensionen oder in drei Dimensionen verändert werden. Das erfindungsgemäße Verfahren ermöglicht den Aufbau von Schichten mit einer unterschiedlichen Zusammensetzung in einer Dimension, in zwei Dimensionen oder in drei Dimensionen. Besonders vorteilhaft ist, dass durch Variation der chemischen Zusammensetzung der Schichten mit dem erfindungsgemäßen Verfahren Farbe, Helligkeit und Transluzenz des herzustellenden Formkörpers, insbesondere von dentalen Formkörpern, eindimensional, zweidimensional oder dreidimensional variiert werden können. Das erfindungsgemäße Verfahren ermöglicht daher die Herstellung von dentalen Formkörpern, die keinen, einen zwei- oder einen dreidimensionalen Farb-, Helligkeits- und Transluzenzgradienten haben. Dies gilt auch für andere physikalischen Eigenschaften des Formkörpers, wie Festigkeit, und Härte.

Darüber hinaus wurde überraschenderweise festgestellt, dass das erfindungsgemäße Verfahren, insbesondere Schritt (a), vorteilhafterweise mit einem Standard 3D-Drucker durchgeführt werden kann.

Der nach dem erfindungsgemäßen Verfahren erhaltene Formkörper liegt vorzugsweise als Gelkörper vor.

Als Ausgangsmaterialien werden im erfindungsgemäßen Verfahren die hierin beschriebenen erfindungsgemäßen keramischen Mischungen verwendet. Unerwarteterweise wurde gefunden, dass bei Verwendung von hierin beschrieben keramischen Mischungen, die eine Kombination aus den Hydrokolloiden Gelatine und Xanthan in Kombination mit keramischen Pulver und/oder Granulaten, die auf ZrO₂ basieren, enthalten, nur geringe Mengen dieser Hydrokolloide benötigt werden, um daraus Grünkörper zu erhalten, die bearbeitet werden können. Die Grünkörper weisen eine ausreichend hohe Festigkeit auf, um sich im Grünzustand schleifen zu lassen. Zudem wirkt sich die Kombination dieser Hydrokolloide unerwarteterweise nicht negativ auf erzielbare Dichten sowie die Transluzenz aus.

In einer bevorzugten Ausführungsform handelt es sich bei dem erfindungsgemäßen Verfahren um ein additives Verfahren, das zur Herstellung eines dentalen Formkörpers geeignet ist, insbesondere zur Herstellung einer vollkeramischen multi-materiellen Zahnrestauration.

In Schritt (a) kommen als Träger alle kommerziell erhältlichen Träger in Frage, die der Fachmann in additiven Verfahren verwendet. Geeignete Träger sind inert gegenüber dem keramischen Material. Träger können beispielsweise Polymere sein, insbesondere PET-, Polyimid-, und Polyvinylchlorid (PVC); Glasträger, vorzugsweise aus Floatglas oder Borosilikatglas; metallische Träger, vorzugsweise aus Edelstahl, Aluminium, Titanlegierungen, Kupferlegierungen; Träger aus nichtmetallischen, anorganischen Werkstoffen wie keramische Träger, vorzugsweise aus ZrO₂, Al₂O₃, Zirconia toughened Alumina (ZTA), Alumina toughened Zirconia (ATZ), SiCx, SiNx, Diamond like carbon, Glassy Carbon, BN, B₄C oder AIN; oder Träger aus einer Kombinationen dieser Materialien.

In Schritt (a) kommen als Positivmodelle alle Materialien infrage, die sich in Form eines Blanks in einer Fräsmaschine oder auch als Filament oder Harz oder Suspension über einen Druckprozess zu einem individuellen Positivmodell verarbeiten lassen können. Unter dem Begriff "Positivmodell" wird eine definierte Druckoberfläche verstanden. Geeignete Positivmodelle sind inert gegenüber dem keramischen Material. Bei den im erfindungsgemäßen Verfahren verwendeten Positivmodellen (Druckoberfläche) handelt es sich um Materialien, welche formstabil und gleichzeitig eine gewisse Kompressibilität bzw. Viskoelastizität aufweisen können und/oder steif und unflexibel sind. Beispielhaft können Kunststoffe oder auch Keramiken oder auch Metalle verwendet werden um das entsprechende Positivmodell zu erzeugen.

Beispielhaft können für das Positivmodell diverse Kunststoffe wie Polymilchsäure (PLA), Acrylnitril-Butadien-Styrol (ABS), Acrylnitril-Styrolacrylat (ASA), Polyethylenterephthalat (PET), glykolisiertes Polyester (PETG), Polycarbonat (PC), Polyetheretherketon (PEEK), Polyetherketonketon (PEKK), Polypropylen (PP), Polyvinylacetat (PVA), Polyamid (PA), Thermoplastisches Polyurethan (TPU), Polymethylmethacrylat (PMMA), Polyurethan (PU) oder Metalle wie Edelstahl, Aluminium, Titanlegierungen, Kupferlegierungen oder Keramiken wie beispielsweise ZrO₂, Al₂O₃, ZTA, ATZ, SiN, SiC, B₄C, BN, AIN oder Wachse, die im Dentalbereich bereits bekannt sind.

In Schritt (a) erfolgt in einer besonders bevorzugten Ausführungsform des erfindungsgemäßen Verfahrens das Auftragen einer keramischen Mischung, vorzugsweise einer kolloidalen keramischen Paste, auf generierte Positivmodelle durch Materialablage. Die Auftragung der Paste kann dabei in horizontalen Schichten und/oder Punkten, oder in vertikalen Schichten oder Punkten erfolgen.

Vorzugsweise erfolgt die Materialablage mit einem Spritzen-Stempel-System und/oder mit einem Extruder-System.

In einer bevorzugten Ausführungsform von Schritt (a) wird die Oberfläche des Positivmodells zusätzlich mit einem Trennmittel versehen, damit sich der ausgehärtete Formkörper leichter von der Oberfläche des Positivmodells entfernen lässt. Geeignete Trennmittel sind bei Raumtemperatur, d.h. bei 25° C, fest und bei Temperaturen von mehr als 45° C flüssig.

Bevorzugte Trennmittel sind Wachse. Besonders bevorzugt sind Wachse die unter die Definition der Deutschen Gesellschaft für Fettwissenschaft in der DGF-Einheitsmethode MI1 (75) fallen. Unter derartigen Wachsen versteht der Fachmann Wachse, die bei 20°C knetbar, fest bis brüchig hart sind, eine grobe bis feinkristalline Struktur aufweisen, farblich durchscheinend bis opak, jedoch nicht glasartig sind und über 40°C ohne Zersetzung schmelzen, wenig oberhalb des Schmelzpunktes leicht flüssig (wenig viskos) sind, eine stark temperaturabhängige Konsistenz und Löslichkeit aufweisen sowie unter leichtem Druck polierbar sind oder aber auch Wachse die im dentalen Bereich bereits bekannt sind und als Tauchwachse verwendet werden.

Die Schichtdicke des aufgetragenen Trennmittels kann gegebenenfalls der Trockenschwindung der Formkörper angepasst werden, beispielsweise wird bei einer Trockenschwindung von 1,4 mm eine Trennmittelschicht von 1,4 mm aufgetragen.

In Schritt (a) wird das keramische Material vorzugsweise kontinuierlich aufgetragen.

Vorzugsweise werden Schichten des keramischen Materials mit einer Dicke von 0,01 mm bis 5 mm aufgetragen, z.B. mit einer Dicke von 0,02 mm bis 4,9 mm, 0,03 mm bis 4,8 mm, 0,04 mm bis 4,7 mm, 0,05 mm bis 4,6 mm, 0,06 mm bis 4,5 mm, 0,07 mm bis 4,4 mm, 0,08 mm bis 4,3 mm, 0,09 mm bis 4,2 mm, 0,1 mm bis 4,1 mm, 0,2 mm bis 4,0 mm, 0,3 mm bis 3,9 mm, 0,01 mm bis 3,8 mm, 0,01 mm bis 3,7 mm, 0,01 mm bis 3,6 mm oder von 0,01 mm bis 3,5 mm.

In Schritt (b) des erfindungsgemäßen Verfahrens kann in einer Ausführungsform das Verfestigen des keramischen Formkörpers mittels Gelbildung, durch Zugeben einer Metallsalzlösung, durch Einstellung einer bestimmten Temperatur, und/oder durch *in situ* Gelierung geschehen.

Ein Vorteil des erfindungsgemäßen Verfahrens ist, dass die Gelbildung nicht durch elektromagnetische Strahlung gestartet wird, so dass die Verwendung von toxischen und umweltschädlichen photopolymerisierbaren Monomeren und Photoinitiatoren vermieden werden kann.

In Schritt (b) werden zum Verfestigen des Formkörpers wässrige Metallsalzlösungen, die einwertige, zweiwertige oder dreiwertige Metallkationen und/oder Mischungen davon enthalten verwendet. Bevorzugt werden wässrige Lösungen verwendet, die als Kationen Li⁺, Na⁺, K⁺, Ca²⁺, Ba²⁺, Sr²⁺, Mg²⁺, Al³⁺ und/oder Fe²⁺-Ionen und/oder Mischungen davon enthalten und als Anionen F⁻, Cl⁻ , Br, S²⁻, CO₃²⁻, SO₄²⁻, PO₄³⁻, NO³⁻, die Salze der Zitronensäure und/oder der Essigsäure enthalten können. Besonders bevorzugt sind wässrige Lösungen, die Ca²⁺- und/oder Ba²⁺- und/oder Sr²⁺- Ionen enthalten können. Ganz besonders bevorzugt sind wässrige Lösungen, die Ca²⁺- Ionen enthalten. Geeignete Metallsalzlösungen sind beispielsweise CaCl₂ Lösungen.

Die Metallsalzlösungen enthalten von 0,001 Gew.% bis 50 Gew.% des Metallsalzes, z.B. von 0,002 Gew.% bis 45 Gew.%, 0,003 Gew.% bis 40 Gew.%, 0,004 Gew.% bis 35 Gew.%, oder 0,005 Gew.% bis 30 Gew.% des Metallsalzes, vorzugsweise mindestens 0,01 Gew.% des Metallsalzes und maximal so viel bis es zu einer vollständig gesättigten Lösung kommt.

In Schritt (b) werden zum Verfestigen des Formkörpers Temperaturen von -50 °C bis 120°C, vorzugsweise Temperaturen von -25 °C bis 90 °C, besonders bevorzugt Temperaturen von -10°C bis 85°C eingestellt.

In einer Ausführungsform des erfindungsgemäßen Verfahrens wird in Schritt (b) das Verfestigen des so erhaltenen Formkörpers durch Gelbildung durch einen oder mehrere der folgenden Schritte gestartet:
(b1) Benetzen einer hierin beschriebenen keramischen Mischung, vorzugsweise einer kolloidalen keramischen Paste, durch eine Spritze und/oder durch einen Extruder und/oder durch Verdüsung und/oder durch Eintauchen des Formkörpers in eine Metallsalzlösung; oder
(b2) Unterschreiten einer bestimmten Temperatur, wobei der Formkörper vorzugsweise kurzzeitig auf eine Temperatur von weniger als 35 °C abgekühlt wird; oder
(b3) Überschreiten einer bestimmten Temperatur, wobei der Formkörper vorzugsweise kurzzeitig auf eine Temperatur von größer als 35 °C erwärmt wird; oder
(b4) *in situ* Gelierung, wobei der Formkörper, der ein Kalziumsalz mit niedriger Löslichkeit enthält, mit einem Säuerungsmittel gemischt wird.

In Schritt (b1) wird die keramische Mischung vorzugsweise von allen Seiten mit der Metallsalzlösung benetzt. In einer besonders bevorzugten Ausführungsform des erfindungsgemäßen Verfahrens wird die Metallsalzlösung in einem ersten Schritt mit einer Düse auf den additiv gefertigten Formkörper gegeben, und in einem zweiten Schritt in ein Bad aus einer Metallsalzlösung getaucht.

Alternativ kann die Gelbildung nach Schritt (b2) durch Unterschreiten einer bestimmten Temperatur gestartet werden. Hierfür wird der Formkörper kurzzeitig, vorzugweise weniger als 90 Minuten lang, z.B. 85 Minuten, 80 Minuten, 75 Minuten, 70 Minuten, 65 Minuten, 60 Minuten, 55 Minuten, 50 Minuten, 45 Minuten, 40 Minuten, oder weniger als 30 Minuten lang auf eine Temperatur von weniger als 35 °C abgekühlt, insbesondere auf weniger als 10 °C, ganz besonders auf weniger als 6 °C, beispielsweise in einem Kühl-/ Gefrierschrank, mittels Eisspray, flüssigem Stickstoff oder anderen geeigneten Kühlmitteln. Schritt (b2) kann nach dem Auftragungsschritt (a) durchgeführt werden. Alternativ kann Schritt (b2) parallel während des Auftragens der keramischen Mischung gemäß Schritt (a) durchgeführt werden.

Alternativ kann die Gelbildung nach Schritt (b3) durch Überschreiten einer bestimmten Temperatur gestartet werden. Hierfür wird der Formkörper kurzzeitig, vorzugweise weniger als 90 Minuten lang, z.B. 85 Minuten, 80 Minuten, 75 Minuten, 70 Minuten, 65 Minuten, 60 Minuten, 55 Minuten, 50 Minuten, 45 Minuten, 40 Minuten, oder weniger als 30 Minuten lang, auf eine Temperatur von größer als 35 °C erwärmt, insbesondere auf Temperaturen von mehr als 50 °C, ganz besonders auf Temperaturen von mehr als 75 °C, beispielsweise in einem Trockenschrank, in einem Ofen, durch Wärmestrahlung (beispielsweise IR-Lampen), durch Heizstäbe oder durch andere geeigneten Wärmequellen.. Schritt (b3) kann nach dem Auftragungsschritt (a) durchgeführt werden. Alternativ kann Schritt (b3) parallel während des Auftragens der keramischen Mischung gemäß Schritt (a) durchgeführt werden.

Alternativ kann die Gelbildung nach Schritt (b4) durch *in situ* Gelierung erfolgen, wobei der Formkörper, der ein Kalziumsalz mit niedriger Löslichkeit enthält, kurz vor dem Auftragen (Schritt (a)) mit einem Säuerungsmittel gemischt wird. Vorzugsweise wird ein Formkörper der CaCO₃ enthält mit D-(+)-Glucono-1,5-lacton, auch als D-glucono-delta-lacton (GDL) bezeichnet, gemischt.

Im erfindungsgemäßen Verfahren können eine oder mehrere unterschiedliche keramische Mischungen verwendet werden. Gemäß Schritt (c) können die Schritte (a) und (b) mit einer zweiten oder weiteren keramischen Mischung, die dieselbe oder eine andere Zusammensetzung wie die erste keramische Mischung hat, wiederholt werden, so dass als Verfahrensprodukt ein Formkörper hergestellt werden kann, der aus mehreren Schichten besteht.

Die Wiederholung der Schritte (a) und (b), d.h. Schritt (c), kann in einer Dimension, in zwei Dimensionen, oder in drei Dimensionen erfolgen. Das erfindungsgemäße Verfahren ist daher überraschenderweise ein sehr vielseitiges Verfahren, das es ermöglicht, Formkörper herzustellen, deren chemische und physikalische Eigenschaften nicht variieren, oder in einer Dimension, in zwei Dimensionen, oder in drei Dimensionen variieren.

Gemäß einer ersten Ausführungsform von Schritt (c) werden die Schritte (a) und (b) mit ein und derselben keramischen Mischung wiederholt. Der Formkörper wird in horizontalen und vertikalen Schichten aufgebaut. Somit wird ein in horizontalen und vertikalen Schichten aufgebauter Formkörper aus einer keramischen Mischung hergestellt (Schritt (c-h1), horizontaler und vertikaler Schichtaufbau aus einem Material, mono-materieller Formkörper).

In einer zweiten alternativen Ausführungsform von Schritt (c) werden gegebenenfalls nach dem Verfestigen des mono-materiellen Formkörpers aus Schritt (c-h1), die Schritte (a) und (b) mit einer zweiten keramischen Mischung, die eine andere Zusammensetzung wie die erste keramische Mischung hat, wiederholt. Die zweite keramische Mischung wird auf der ersten keramischen Mischung aufgetragen. Somit wird ein multi-materieller Formkörper aus zwei keramischen Mischungen hergestellt (horizontaler und vertikaler Schichtaufbau aus zwei Materialien, multi-materieller Formkörper).

In einer dritten alternativen Ausführungsform von Schritt (c) werden gegebenenfalls nach dem Verfestigen des mono-materiellen Formkörpers aus Schritt (c-h1), die Schritte (a) und (b) mit einer zweiten keramischen Mischung, die eine andere Zusammensetzung wie die erste keramische Mischung hat, wiederholt. Die zweite keramische Mischung wird auf der ersten keramischen Mischung aufgetragen. Anschließend kann eine dritte oder weitere keramische Mischungen aufgetragen werden. Somit wird ein multi-materieller Formkörper aus drei oder mehr keramischen Mischungen hergestellt (horizontaler und vertikaler Schichtaufbau aus drei oder mehr Materialien, multi-materieller Formkörper).

Folglich kann mit dem erfindungsgemäßen Verfahren ein Formkörper hergestellt werden, dessen chemische und physikalische Eigenschaften in drei Dimensionen variieren, nämlich von der ersten Schicht zur zweiten oder weiteren Schicht.

Ein Vorteil des erfindungsgemäßen Verfahrens ist daher, dass dieses zur Herstellung von mehrschichtigen Formkörpern geeignet ist, bei denen mehrere Schichten keramischer Mischungen mit unterschiedlichen Zusammensetzungen aufeinandergeschichtet werden, so dass sogenannte multi-materielle Formkörper hergestellt werden können. Von besonderem Vorteil ist, dass die chemischen und physikalischen Eigenschaften der Formkörper in einer Dimension, in zwei Dimensionen oder in drei Dimensionen variiert werden können, so dass Farb-, Helligkeits-, und Transluzenzgradienten gezielt eingestellt werden können. Das erfindungsgemäße Verfahren ermöglicht daher die Herstellung von dentalen Formkörpern, die nach dem Sintern einen Farbverlauf haben, der dem natürlichen Zahn ähnelt.

In einer Ausführungsform kann nach dem erfindungsgemäßen Verfahren ein Formkörper erhalten werden, dessen innere Schicht aus einem ersten Material und dessen äußere Schicht aus einem anderen Material besteht.

In einer bevorzugten Ausführungsform des erfindungsgemäßen Verfahrens wird zuerst nach Schritt (a) die innere Schicht des Formkörpers mit einer Schichtdicke von 0,01 mm bis 1 mm aufgetragen. Diese wird dann gemäß Schritt (b) durch Zugabe einer Metallsalzlösung, durch Einstellen einer bestimmten Temperatur oder durch *in situ* Gelierung zu einem gelartigen Formkörper. Die erste Schicht kann optional oberflächlich nachbearbeitet werden bevor die nächste, d.h. eine zweite Schicht aufgetragen wird. Bevorzugt wird die erste Schicht von vornherein so aufgebaut, dass eine oberflächliche Zwischenbearbeitung nicht notwendig ist.

Anschließend wird eine zweite Schicht mit einer Schichtdicke von 0,01 mm bis 1 mm aufgetragen. Diese wird dann gemäß Schritt (b) durch Zugabe einer Metallsalzlösung, durch Einstellen einer bestimmten Temperatur oder durch *in situ* Gelierung zu einem gelartigen Formkörper.

Ein weiterer Gegenstand der vorliegenden Erfindung ist daher ein gelartiger Formkörper, der nach dem oben beschriebenen Verfahren gemäß den Schritten (a), (b) und (c) erhältlich ist. Vorzugsweise handelt es sich um einen mono-materiellen oder um einen multi-materiellen Formkörper.

Darüber hinaus betrifft die vorliegende Erfindung einen gelartigen Formkörper umfassend eine innere Schicht bestehend aus einem ersten Material und einer aus einem anderen Material bestehenden äußeren Schicht erhältlich nach einem hierin beschriebenen erfindungsgemäßen Verfahren.

In einer weiteren Ausführungsform des erfindungsgemäßen Verfahrens wird der so erhaltene Formkörper in einem weiteren Schritt (d) mittels subtraktiver Verfahren im gelartigen Zustand und/oder im getrockneten Zustand vor dem Sintern nachbearbeitet, vorzugsweise durch subtraktive Verfahren wie beispielsweise Abtrennen, Polieren, Schleifen und Fräsen. Der erhaltene Formkörper kann mittels allen gängigen maschinellen Verfahren bearbeitet werden.

Anschließend können die so erhaltenen Formkörper, in einem weiteren Schritt (e) gesintert werden. Die Sinterung verläuft beispielsweise mit einer Aufheizrate von 8-10°C/min auf 1350-1550°C, welche 2 Stunden gehalten wird. Die Abkühlrate verläuft mit 8-10°C/min. Die Formkörper sind auch für eine Schnellsinterung geeignet. Eine Schnellsinterung verläuft beispielsweise mit einer Aufheizrate von 8-10°C/min auf 1350-1550°C, welche 30 Minuten lang gehalten wird. Die Abkühlrate verläuft mit 40°C/min.

Ein weiterer Gegenstand der vorliegenden Erfindung ist daher ein Formkörper, der nach dem oben beschriebenen Verfahren gemäß den Schritten (a), (b), (c), (d) und (e) erhältlich ist.

In einer bevorzugten Ausführungsform handelt es sich bei diesem Formkörper um einen dentalen mono-materiellen oder multi-materiellen Formkörper, der mittels eines hierin beschriebenen erfindungsgemäßen Verfahrens hergestellt ist. Besonders bevorzugt handelt es sich um eine multi-materielle Zahnrestauration, deren Farbverlauf der Farbe und Transluzenz eines natürlichen Zahns ähnelt, wie einem Inlay, Onlay, Veneer, einer Krone, Bracket, Brücke oder eines Gerüsts, Abutments oder Implantats.

In einer bevorzugten Ausführungsform wird mit dem erfindungsgemäßen Verfahren eine vollkeramische multi-materielle Zahnrestauration hergestellt.

Ein weiterer Gegenstand der Erfindung ist ein Verfahren zur Herstellung einer gedruckten Zahnrestauration, das einen oder mehrere der folgenden Schritte umfasst:
(a) Erstellen einer virtuellen Zahnrestauration durch intraorales oder extraorales Scannen der Mundsituation;
(b) Entwerfen eines virtuellen Modells der Zahnrestauration mit CAD-Software;
(c) Gegebenenfalls Beaufmaßen der virtuellen Zahnrestauration entsprechend des Sinterschwundes der Zahnrestauration;
(d) Drucken oder Herausfräsen der gegebenenfalls beaufmaßten Zahnrestauration aus einem formstabilen Material, welches beim späteren Druckprozess als Positivmodell verwendet wird;
(e) Modellieren eines inneren Dentinkerns sowie einer äußeren Schmelzschicht anhand des gescannten Zahns über die CAD-Software oder durch virtuelle vordefinierte Zahnrestaurationen;
(f) Zerlegen der modellierten, gegebenenfalls beaufmaßten Zahnrestauration in horizontale Schichten;
(g) Erstellen von Bahn- und Frässtrategien für die Auftragung sowie spätere Abtragung der verwendeten (keramischen) Druckmaterialien;
(h) Auftragen eines hierin beschriebenen Trennmittels auf die entsprechend beaufmaßte, formstabile, Zahnrestauration;
(i) Drucken der virtuell erzeugten und in horizontale Schichten zerlegten Zahnrestauration auf dem vorher erzeugten beaufmaßten, formstabilen, Positivmodell nach dem hierin beschriebenen Verfahren;
(j) Verfestigen der Zahnrestauration durch Gelbildung nach dem hierin beschriebenen Verfahren, insbesondere nach einem der Schritte (b1), (b2), (b3), oder (b4);
(k) Trocknen der gedruckten Zahnrestauration;
(l) Bearbeiten der Oberfläche der gedruckten Zahnrestauration.

In einer weiteren Ausführungsform enthält das erfindungsgemäße Verfahren einen zusätzlichen Schritt (m) Sintern der nach Schritt (l) erhaltenen gedruckten Zahnrestauration.

Schritt (a) kann mit einem handelsüblichen Scanner z.B. in einer Zahnarztpraxis durchgeführt werden.

Schritt (b) kann mit CAD-Software durchgeführt werden.

In Schritt (c) kann bei der virtuellen Erstellung der Zahnrestauration in einer Ausführungsform der jeweilige Sinterschwund des Materials der Zahnrestauration, z.B. der Glaskeramik, von Keramiken auf Basis von ZrO₂, Al₂O₃, ZTA, ATZ, B₄C, SiC, Si₃N₄ oder TiO₂, oder von Kompositmaterialien, bevorzugt von Keramiken auf Basis von ZrO₂, Al₂O₃, ZTA oder ATZ.

In Schritt (d) kann das Positivmodell aus einem formstabilen und gleichzeitig kompressiblen bzw. viskoelastischem und/oder steifem und unflexiblen Material gedruckt oder herausgefräst werden. Das verbleibende Material wird im späteren Druckprozess als Positivmodell verwendet. Dieses Positivmodell gibt der Zahnrestauration die Form der Kavität vor.

Gemäß Schritt (e) kann der innere Dentinkern einer Zahnrestauration, vorzugsweise eines Zahns, sowie eine äußere Schmelzschicht des gescannten Zahns über die CAD-Software oder durch virtuelle vordefinierte Zahnrestaurationen modelliert werden. Die Dicke des aufgetragenen Dentinmaterials oder Schmelzmaterials kann angepasst werden.

Gemäß Schritt (f) kann die modellierte, gegebenenfalls beaufmaßte Zahnrestauration, vorzugsweise mit einer Slicersoftware virtuell in horizonale Schichten zerlegt werden

In Schritt (i) erfolgt der Druck der Zahnrestauration nach dem hierin beschriebenen erfindungsgemäßen Verfahren. Zunächst wird eine hierin beschriebene erste keramische Mischung, die der gewünschten Zusammensetzung des Dentinkerns entspricht, auf das Positivmodell aufgetragen, wobei ein Formkörper erhalten wird. Anschließend wird eine zweite keramische Mischung aufgetragen, die der gewünschten Zusammensetzung der Schmelzschicht entspricht. Der so erhaltene Formkörper wird durch Gelbildung zu einem gelartigen Formkörper verfestigt.

In einer weiteren Ausführungsform des Schritts (i) wird die Zahnrestauration durch einen multi-materiellen Aufbau hergestellt, indem mehr als zwei unterschiedliche keramische Mischungen als Ausgangsmaterial verwendet werden. Dadurch können Zahnrestaurationen mit unterschiedlichen optischen und mechanischen Eigenschaften erzeugt werden. Insbesondere können so Zahnrestaurationen mit bestimmten Farb- und Transluzenzgradienten erzeugt werden.

In Schritt (k) kann die Zahnrestauration mittels wärmeentwickelnder Energiequellen, wie beispielsweise einem Klima-/Trockenschrank, Infrarotstrahlung oder Heizstäbe, oder mittels hochenergetischer Mikrowellen getrocknet werden, damit die so erhaltene Zahnrestauration schneller weiterbearbeitet werden kann.

In Schritt (l) kann die Oberfläche der so erhaltenen Zahnrestauration nach den hierein beschriebenen subtraktiven Verfahren weiterbearbeitet werden, um die Außenfläche der gedruckten Zahnrestauration in ihre endgültige Form zu bringen.

In Schritt (m) kann das Sintern der gedruckten Zahnrestauration bei Temperaturen von 1350 °C bis 1600 °C durchgeführt werden.

Die nachfolgenden Beispiele dienen der Erläuterung der Erfindung. Die Erfindung ist jedoch nicht auf die Beispiele beschränkt.

### Beispiele

### Beispiel 1 - Herstellung einer erfindungsgemäßen keramischen Mischung

### Beispiel 1.1 - Allgemeines Verfahren zur Herstellung der erfindungsgemäßen keramischen Mischung

In Schritt (a) wurde das Dispergiermittel zu dem Lösungsmittel gegeben und durch Rühren, beispielsweise mit Hilfe eines Magnetrührers, gelöst. Nach Lösen des Dispergiermittels wurde zur Dispergiermittellösung in mehreren Teilschritten das gefärbte oder ungefärbte keramische entbinderte Pulver unter stetigem Rühren, beispielsweise mit Hilfe eines Standrührers, hinzugegeben, wodurch eine Suspension erhalten wurde.

Die Suspension wurde in einen verschließbaren Kunststoffbehälter gefüllt. Zur Suspension wurde eine entsprechende Menge an Mahlkugeln, beispielsweise ZrO₂-Mahlkugeln mit einem Durchmesser von 2 mm gegeben. Die Menge der Mahlkugeln richtet sich nach der Größe des Mahlbehälters und der Menge des gefärbten oder ungefärbten keramischen Pulvers. Der Mahlbehälter mit der Suspension wurde mindestens 24 Stunden lang auf die Rollenbank gestellt, um eventuell vorhandene Agglomerate in der Suspension zu zerstören und um eine homogene Verteilung der Komponenten zu erreichen.

Gemäß Schritt (c) wurde separat eine wässrige Lösung eines Hydrokolloids hergestellt. Hierfür wurde die entsprechende Menge mindestens eines Hydrokolloids in einem Lösungsmittel kolloidal gelöst bzw. fein verteilt. Falls in einer Mischung mehrere Hydrokolloide verwendet werden, werden jeweils zunächst die einzelnen Hydrokolloidlösungen hergestellt. Alternativ können mehrere Hydrokolloide auch gleichzeitig in einem Lösungsmittel kolloidal gelöst bzw. fein verteilt werden. Hierfür wurde wieder ein Magnetrührer mit Rührfisch verwendet. Nach vollständiger Verteilung des einen oder mehrerer Hydrokolloide in der Lösung wurde die Drehzahl des Magnetrührers reduziert und die so erhaltene kolloidale Lösung durch langsames Rühren homogenisiert und entlüftet.

Gemäß Schritt (d) wurde die wässrige Lösung des mindestens einen Hydrokolloids zu der nach Schritt (b) erhaltenen Suspension ungefärbten oder gefärbten keramischen Pulvers gegeben. Die so erhaltene kolloidale keramische Suspension wurde mindestens 24 Stunden lang auf der Rollenbank homogenisiert, bis eine homogene kolloidale Suspension erhalten wurde.

Im letzten Schritt (e) wurde der Lösungsmittelgehalt der noch flüssigen homogenen kolloidalen Suspension durch thermische Einwirkung, beispielweise durch eine Heizplatte mit einer Temperatur von 70°C unter stetiger Rühreinwirkung soweit reduziert, bis die erfindungsgemäße keramische Mischung erhalten wurde. Die keramische Mischung liegt bevorzugt als kolloidale keramische Paste vor.

Die so erhaltene keramische Mischung wurde über einen Mixer, vorzugsweise über einen Dentalmixer, entlüftet, und luftfrei in Kartuschen gefüllt.

### Beispiel 1.2 - Herstellung einer keramischen Mischung mit Natriumalginat als Hydrokolloid

Tabelle 2 gibt die Zusammensetzung der Ausgangskomponenten der keramischen Mischung an. Alle Ausgangskomponenten wurden käuflich erworben.

**Tabelle 2: Zusammensetzung der Ausgangskomponenten der keramischen Mischung**

| **Komponente** | **Anteil der Komponente in der keramischen Mischung (Gew.%)** | **Anteil der Komponente in der wässrigen Lösung eines Hydrokolloids** |
|---|---|---|
| **Komponente (a):** entbindertes 5Y-ZrO₂ (Fa. Tosoh, Zpex^{®} smile) | 64,30 | |
| **Komponente (d):** Lösungsmittel für das Dispergiermittel (Deionisiertes Wasser) | 19,32 | |
| **Komponente (b):** Dispergiermittel* (Diammoniumhydrogencitrat >98%, reinst Firma Roth) | 0,3 | |
| **Komponente (b): Dispergiermittel* (L-Ascorbinsäure Firma MP Biomedicals)** | 0,05 | |
| **Komponente (c):** Na-Alginat* (Neupert Ingredients GmbH, 400-600 cps) | | 0,5 |
| **Komponente (d):** Lösungsmittel für das Hydrokolloid (Deionisiertes Wasser) | | 15,83 |
| *bezogen auf den Feststoffgehalt. | | |

In Schritt (a) wurden 1,52 g der Dispergiermittel Diammoniumhydrogencitrat und 0,253 g L-Ascorbinsäure zu 152 g deionisiertem Wasser (VE-Wasser) gegeben und durch Rühren, beispielsweise mit Hilfe eines Magnetrührers, gelöst. Nach Lösen des Dispergiermittels wurden zur Dispergiermittellösung in mehreren Teilschritten 506 g des gefärbten keramischen entbinderten Pulvers 5Y-ZrO₂ (Fa. Tosoh, Zpex^{®} smile) unter stetigem Rühren, beispielsweise mit Hilfe eines Standrührers, hinzugegeben, wodurch eine Suspension erhalten wurde.

Die Suspension wurde in einen verschließbaren Kunststoffbehälter gegeben. Zur Suspension wurden 600 g ZrO₂-Mahlkugeln mit einem Durchmesser von 2 mm gegeben. Der Mahlbehälter mit der Suspension wurde 24 Stunden lang auf die Rollenbank gestellt, um eventuell vorhandene Agglomerate in der Suspension zu zerstören und um eine homogene Verteilung der Komponenten zu erreichen.

Gemäß Schritt (c) wurde separat eine wässrige Lösung des Hydrokolloids Natriumalginat hergestellt. Hierfür wurden 2,54 g Natriumalginat in 124,6 g deionisiertem Wasser (VE-Wasser) kolloidal gelöst bzw. kolloidal fein verteilt. Hierfür wurde wieder ein Magnetrührer mit Rührfisch verwendet. Nach vollständiger Verteilung des Natriumalginats in der Lösung wurde die Drehzahl des Magnetrührers reduziert und die so erhaltene kolloidale Lösung durch langsames Rühren entlüftet.

Gemäß Schritt (d) wurde die wässrige Lösung des Natriumalginats zu der nach Schritt (b) erhaltenen Suspension des gefärbten keramischen Pulvers 5Y-ZrO₂ (Fa. Tosoh Zpex^{®} smile) gegeben. Die so erhaltene kolloidale keramische Suspension wurde mindestens 24 Stunden lang auf der Rollenbank homogenisiert, bis eine homogene kolloidale Suspension erhalten wurde.

Im letzten Schritt (e) wurde der Lösungsmittelgehalt der noch flüssigen homogenen kolloidalen Suspension durch thermische Einwirkung beispielsweise durch die Heizplatte eines Magnetrührers und unter stetiger Rühreinwirkung eines Standrührers bei 70°C soweit reduziert, bis die erfindungsgemäße keramische Mischung enthaltend Natriumalginat als Hydrokolloid erhalten wurde. Die keramische Mischung liegt bevorzugt als kolloidale keramische Paste vor.

Die so erhaltene keramische Mischung wurde über einen Mixer, vorzugsweise über einen Dentalmixer, entlüftet, und luftfrei in Kartuschen gefüllt.

### Beispiel 1.3 - Herstellung einer keramischen Mischung mit Gelatine und Xanthan als Hydrokolloide

Tabelle 3 gibt die Zusammensetzung der Ausgangskomponenten der keramischen Mischung an. Alle Ausgangskomponenten wurden käuflich erworben.

**Tabelle 3: Zusammensetzung der Ausgangskomponenten der keramischen Mischung**

| **Komponente** | **Anteil der Komponente in der keramischen Mischung (Gew.%)** | **Anteil der Komponente in der wässrigen Lösung eines Hydrokolloids** |
|---|---|---|
| **Komponente (a):** entbindertes 5Y-ZrO₂ (Fa. Tosoh Zpex^{®} smile) | 64,81 | |
| **Komponente (d):** Lösungsmittel für das Dispergiermittel (Deionisiertes Wasser) | 19,36 | |
| **Komponente (b):** Dispergiermittel* (Diammoniumhydrogencitrat >98%, reinst Firma Roth) | 0,3 | |
| **Komponente (c):** Gelatine* (Fa. AppliChem 128-192 Bloom) | | 0,25 |
| **Komponente (c):** Xanthan* (Fa. Roth, reinst) | | 0,125 |
| **Komponente (d):** Lösungsmittel für das Hydrokolloid (Deionisiertes Wasser) | | 15,39 |
| *bezogen auf den Feststoffgehalt. | | |

In Schritt (a) wurden 1,52 g des Dispergiermittels Diammoniumhydrogencitrat zu 150,86 g deionisiertem Wasser (VE-Wasser) gegeben und durch Rühren, beispielsweise mit Hilfe eines Magnetrührers, gelöst. Nach Lösen des Dispergiermittels wurden zur Dispergiermittellösung in mehreren Teilschritten 505,14 g des gefärbten keramischen entbinderten Pulvers 5Y-ZrO₂ (Fa. Tosoh, Zpex^{®} smile) unter stetigem Rühren, beispielsweise mit Hilfe eines Standrührers, hinzugegeben, wodurch eine Suspension erhalten wurde.

Zur Suspension wurden 600 g ZrO₂-Mahlkugeln mit einem Durchmesser von 2 mm gegeben. Der Mahlbehälter mit der Suspension wurde 24 Stunden lang auf die Rollenbank gestellt, um eventuell vorhandene Agglomerate in der Suspension zu zerstören und um eine homogene Verteilung der Komponenten zu erreichen.

In Schritt (c) wurden parallel zwei separate Hydrokolloidlösungen von Gelatine bzw. Xanthan hergestellt. Zur Herstellung einer Gelatine Hydrokolloidlösung wurden 1,27 g Gelatine in 59,65 g deionisiertem Wasser (VE-Wasser) gelöst. Zur Herstellung einer Xanthan Hydrokolloidlösung wurden 0,635 g Xanthan in 60,285 g deionisiertem Wasser (VE-Wasser) gelöst. Hierfür wurde wieder jeweils ein Magnetrührer mit Rührfisch verwendet. Nach vollständiger Verteilung der Gelatine bzw. des Xanthans in der Lösung wurde die Drehzahl des Magnetrührers reduziert und die so erhaltenen kolloidalen Lösungen von Gelatine bzw. Xanthan durch langsames Rühren entlüftet. Nach vollständiger kolloidaler Lösung bzw. kolloidaler Verteilung der Komponenten in ihrem entsprechenden Lösungsmittel wurden beide Lösungen zu einer kombiniert. Die gesamte Lösung von Gelatine und Xanthan wurde durch langsames Rühren entlüftet.

Gemäß Schritt (d) wurden die wässrige Kombinationslösung der Gelatine und des Xanthans zu der nach Schritt (b) erhaltenen Suspension des gefärbten keramischen Pulvers 5Y-ZrO₂ (Fa. Tosoh Zpex^{®} smile) gegeben. Die so erhaltene kolloidale keramische Suspension wurde mindestens 24 Stunden lang auf der Rollenbank homogenisiert, bis eine homogene kolloidale Suspension erhalten wurde.

Im letzten Schritt (e) wurde der Lösungsmittelgehalt der noch flüssigen homogenen kolloidalen Suspension durch thermische Einwirkung, beispielweise durch die Heizplatte eines Magnetrührers und unter stetiger Rühreinwirkung eines Standrührers bei 70°C soweit reduziert, bis die erfindungsgemäße keramische Mischung enthaltend Gelatine und Xanthan als Hydrokolloid erhalten wurde. Die keramische Mischung liegt bevorzugt als kolloidale keramische Paste vor.

Die so erhaltene keramische Mischung wurde über einen Mixer, vorzugsweise über einen Dentalmixer, entlüftet, und luftfrei in Kartuschen gefüllt.

### Beispiel 2 - Erfindungsgemäße Formkörper

### Beispiel 2.1 - Allgemeines Verfahren zur Herstellung eines erfindungsgemäßen Formkörpers

Die für die Herstellung der Formkörper benötigten und abgefüllten Kartuschen wurden in eine entsprechend der Kartuschengeometrie gefertigte Halterung gespannt. An die Kartuschenspitze, welche eine Luer Lock Verbindungsstelle hat, wurde eine entsprechende Düse mit einem Durchmesser von 0,84 mm angebracht. Vorteilhaft an dem Luer Lock System ist die Möglichkeit, den Düsendurchmesser jeder Anwendung schnell und ohne große Mühe anzupassen. Hierbei wurde ein kommerziel erhältliches Luer Lock System verwendet.

Die Herstellung des Formkörpers erfolgte durch eine kontinuierliche Pastenstrangablage. Die Gelbildung wurde während des Druckens aktiv durch Kühlung der Paste auf Temperaturen von ≤ 6 °C eingeleitet. Alternativ wurden die Formkörper am Ende des Druckprozesses abgekühlt, um die Gelbildung zu beschleunigen beziehungsweise zu unterstützen.

Nach einer kurzen Kühlphase (≤ 5 Min) auf Temperaturen von ≤ 6 °C konnten die Formkörper direkt im Trockenschrank bei höheren Temperaturen, beispielsweise bei Temperaturen von ≤ 60°C) schnell getrocknet werden. Im Anschluss an die beschleunigte Trocknung wurden die Formkörper oberflächlich durch subtraktive Verfahren in eine Endkonturnahe Form gebracht. Nach der Bearbeitung wurden die Formkörper dann bis zur Massekonstanz getrocknet.

In einem zusätzlichen Verfahrensschritt wurden die Formkörper gesintert. Die Sinterung verlief mit einer Aufheizrate von 8-10°C/min auf 1350-1550°C, welche 2 Stunden gehalten wurde. Die Abkühlrate verlief mit 8-10°C/min.

### Beispiel 2.2 - Allgemeines Verfahren zur Herstellung eines erfindungsgemäßen Formkörpers

Die für die Herstellung der Formkörper benötigten und abgefüllten Kartuschen wurden in eine entsprechend der Kartuschengeometrie gefertigte Halterung gespannt. An die Kartuschenspitze, welche eine Luer Lock Verbindungsstelle hat, wurde eine entsprechende Düse mit einem Durchmesser von 0,84 mm angebracht. Vorteilhaft an dem Luer Lock System ist die Möglichkeit, den Düsendurchmesser jeder Anwendung schnell und ohne große Mühe anzupassen. Hierbei wurde ein kommerziel erhältliches Luer Lock System verwendet.

Die Herstellung des Formkörpers erfolgte durch eine kontinuierliche Pastenstrangablage. Die Gelbildung wurde nach dem Druck durch Tauchen des Formkörpers in eine Metallsalzlösung eingeleitet.

Nach einer kurzen Verweildauer in der Metallsalzlösung (≤ 15 Min) und einer kurzen Verweildauer an Luft (≤ 15 min) konnte der Formkörper vom Positivmodell getrennt werden und direkt im Trockenschrank bei höheren Temperaturen, beispielsweise bei Temperaturen von ≤ 60°C ) schnell getrocknet werden. Im Anschluss an die beschleunigte Trocknung wurden die Formkörper oberflächlich durch subtraktive Verfahren in eine Endkonturnahe Form gebracht. Nach der Bearbeitung wurden die Formkörper dann bis zur Massekonstanz getrocknet.

In einem zusätzlichen Verfahrensschritt wurden die Formkörper gesintert. Die Sinterung verlief mit einer Aufheizrate von 8-10°C/min auf 1350-1550°C, welche 2 Stunden gehalten wurde. Die Abkühlrate verlief mit 8-10°C/min.

### Beispiel 2.3 - Herstellung eines Formkörpers aus einer keramischen Mischung mit Natriumalginat als Hydrokolloid

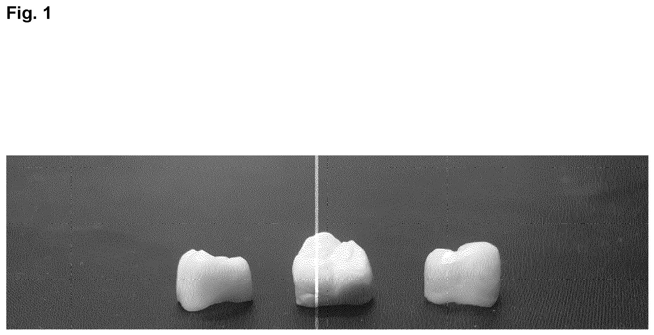

Nach dem in Beispiel 2.2 beschriebenen allgemeinen Verfahren wurden mehrere dentale Formkörper, d.h. drei Zahnkronen aus der keramischen Mischung mit Natriumalginat hergestellt. Fig. 1 zeigt drei verschiedene Zahnkronen, die aus der erfindungsgemäßen keramischen Mischung mit Natriumalginat und einem subtraktiven Verfahren hergestellt wurden.

### Beispiel 2.4 - Herstellung eines Formkörpers aus einer keramischen Mischung mit Gelatine und als Hydrokolloid

Nach dem in Beispiel 2.1 beschriebenen allgemeinen Verfahren wurde ein Formkörper aus der keramischen Mischung mit Gelatine und Xanthan hergestellt.

Beispielsweise wurden aus dieser Zusammensetzung Formkörper in Form von Plättchen gedruckt und durch subtraktive Verfahren, wie schleifen und polieren, in endkonturnahe Formen gebracht, so dass sie nach dem Dichtsintern einen Durchmesser von 14 mm (± 2 mm) und eine Dicke von 1,2 mm (±0,2 mm) aufwiesen. An diesen Formkörpern wurden die Dichte, die Festigkeit sowie die Transluzenz gemessen.

Erzielte Dichten, gemessen nach dem Archimedischen Prinzip, lagen im Mittel bei 6,025 g/cm³ ± 0,044 g/cm³. Erzielte Festigkeiten, gemessen nach der ball-on-threeball Methode, lagen im Mittel bei 661,1 MPa ± 118,7 MPa, Erzielte Transluzenzwerte, gemessen über schwarzem und weißem Hintergrund im CIELAB-Farbraum, lagen stets über 30%.

Zusätzlich wurde die Transluzenz des gemäß Beispiel 2.4 gedruckten und durch subtraktive Verfahren in endkonturnahe Form gebrachten und gesinterten Plättchens mit der Dichte und Transluzenz eines zweiten Plättchens verglichen, welches aus einer Standard ZrO₂-Ronde herausgefräst und gesintert wurde.

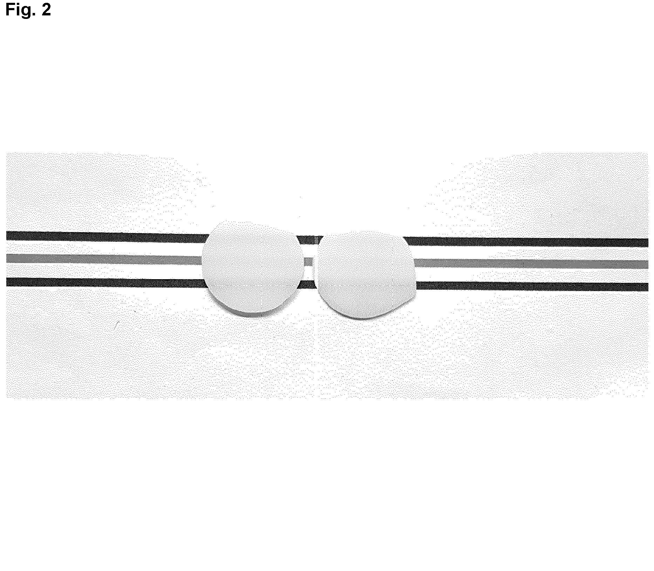

Fig. 2 zeigt zwei Plättchen. Das linke Plättchen wurde aus einer Standard ZrO₂-Ronde herausgefräst und gesintert. Das rechte Plättchen wurde nach Beispiel 2.4 nach dem erfindungsgemäßen Verfahren aus einer erfindungsgemäßen keramischen Mischung mit Gelatine und Xanthan und einem anschießenden subtraktiven Verfahren hergestellt und gesintert. Das Foto der Plättchen zeigt, dass die Transluzenzen der Plättchen vergleichbar sind. Folglich können mit den erfindungsgemäßen Verfahren dentale Formkörper hergestellt werden, die vergleichbare Transluzenzen wie gefräste Dentalmaterialien aufweisen.

## Patentansprüche

1. Verwendung einer keramischen Mischung zur Herstellung von dentalen Formkörpern, wobei die keramische Mischung zur Herstellung von dentalen Formkörpern geeignet ist und die folgenden Komponenten enthält:
(a) ein ungefärbtes und/oder ein gefärbtes keramisches Pulver auf Basis von ZrO₂, Al₂O₃, Zirkoniumdioxid-verstärktem Aluminiumoxid (ZTA), Aluminiumoxid-verstärktem Zirkoniumoxid (ATZ), B₄C, SiC, oder Si₃N₄, wobei das ZrO₂ stabilisiert ist, und/oder ein ungefärbtes und/oder ein gefärbtes keramisches Granulat auf Basis von ZrO₂, Al₂O₃, Zirkoniumdioxid-verstärktem Aluminiumoxid (ZTA), Aluminiumoxid-verstärktem Zirkoniumoxid (ATZ), B₄C, SiC, oder Si₃N₄, wobei das ZrO₂ stabilisiert ist, und/oder Kombinationen davon auf Basis von ZrO₂, Al₂O₃, Zirkoniumdioxid-verstärktem Aluminiumoxid (ZTA), Aluminiumoxid-verstärktem Zirkoniumoxid (ATZ), B₄C, SiC, oder Si₃N₄, wobei das ZrO₂ stabilisiert ist;
(b) mindestens ein Dispergiermittel;
(c) mindestens ein Hydrokolloid ausgewählt aus der Gruppe von Carubin, Gellan, Hydroxypropylguar, Agarose, Carrageen, Alginat, Dextran, Stärke, Gummi arabicum, Galactomannane, Glucomannan, Xanthan, Scleroglucan, Caseinat, oder Mischungen davon; und
(d) mindestens ein Lösungsmittel.

2. Verwendung einer keramischen Mischung nach Anspruch 1, wobei die keramische Mischung mindestens ein Antitrocknungsmittel enthält, wobei das Antitrocknungsmittel Ethylenglycol und/oder Glycerin umfasst.

3. Verwendung einer keramischen Mischung nach einem der Ansprüche 1 oder 2, wobei die keramische Mischung als Komponente (a) ein keramisches Pulver und/oder ein keramisches Granulat auf Basis von ZrO₂, Al₂O₃, ZTA oder ATZ enthält, wobei das ZrO₂ jeweils mit CaO, Y₂O₃, La₂O₃, CeO₂, MgO, Er₂O₃, Pr₂O₃ und/oder Nb₂O₅ stabilisiert ist, besonders bevorzugt auf Basis von stabilisiertem ZrO₂.

4. Verwendung einer keramischen Mischung nach einem der Ansprüche 1 bis 3, wobei die keramische Mischung von 35 Gew.-% bis 99 Gew.-%, vorzugsweise von 75 Gew.-% bis 95 Gew.-% der Komponente (a) enthält.

5. Verwendung einer keramischen Mischung nach einem der Ansprüche 1 bis 4, wobei die keramische Mischung als Dispergiermittel (b) Aminoalkohole, wie Ethanolamin, Carbonsäuren, wie Maleinsäure und Citronensäure, Carbonsäuresalze, wie Citronensäuresalze oder vinyloge Carbonsäuren, wie Ascorbinsäure, und Salze davon, sowie Mischungen davon enthält, vorzugsweise mindestens ein Dispergiermittel ausgewählt aus Ethanolamin, Citronensäure, Citronensäuresalzen und Ascorbinsäure, besonders bevorzugt sind L-Ascorbinsäure und Diammoniumhydrogencitrat.

6. Verwendung einer keramischen Mischung nach einem der vorherigen Ansprüche 1 bis 5, wobei die keramische Mischung als Hydrokolloid (c) eine Kombination aus zwei Hydrokolloiden enthält.

7. Verwendung einer keramischen Mischung nach einem der Ansprüche 1 bis 6, wobei die keramische Mischung zusätzlich als Komponente (e) mindestens ein Bindemittel und/oder als Komponente (f) mindestens ein Konservierungsmittel und/oder als Komponente (g) mindestens einen Weichmacher enthält.

8. Verwendung einer keramischen Mischung nach einem der vorherigen Ansprüche, wobei die keramische Mischung zur Herstellung von mono-materiellen oder multi-materiellen dentalen Formkörpern, vorzugsweise von Zahnrestaurationen, wie einem Inlay, Onlay, Veneer, einer Krone, Bracket, Brücke oder eines Gerüsts, Abutments oder Implantats verwendet wird.

9. Verfahren zur Herstellung eines dentalen Formkörpers, umfassend die folgenden Schritte:
(a) Auftragen einer ersten keramischen Mischung auf einen Träger oder auf ein Positivmodell, wobei ein Formkörper erhalten wird;
(b) Verfestigen des so erhaltenen Formkörpers durch Gelbildung zu einem gelartigen Formkörper; und
(c) ggf. Wiederholen der Schritte (a) und (b) mit einer zweiten oder weiteren keramischen Mischung, die dieselbe oder eine andere Zusammensetzung wie die erste keramische Mischung hat;
wobei die keramische Mischung die folgenden Komponenten enthält:
ein ungefärbtes und/oder ein gefärbtes keramisches Pulver auf Basis von ZrO₂, Al₂O₃, Zirkoniumdioxid-verstärktem Aluminiumoxid (ZTA), Aluminiumoxid-verstärktem Zirkoniumoxid (ATZ), B₄C, SiC, oder Si₃N₄, wobei das ZrO₂ stabilisiert ist, und/oder ein ungefärbtes und/oder ein gefärbtes keramisches Granulat auf Basis von ZrO₂, Al₂O₃, Zirkoniumdioxid-verstärktem Aluminiumoxid (ZTA), Aluminiumoxid-verstärktem Zirkoniumoxid (ATZ), B₄C, SiC, oder Si₃N₄, wobei das ZrO₂ stabilisiert ist, und/oder Kombinationen davon auf Basis von ZrO₂, Al₂O₃, Zirkoniumdioxid-verstärktem Aluminiumoxid (ZTA), Aluminiumoxid-verstärktem Zirkoniumoxid (ATZ), B₄C, SiC, oder Si₃N₄, wobei das ZrO₂ stabilisiert ist;
mindestens ein Dispergiermittel;
mindestens ein Hydrokolloid ausgewählt aus der Gruppe von Carubin, Gellan, Hydroxypropylguar, Agarose, Carrageen, Alginat, Dextran, Stärke, Gummi arabicum, Galactomannane, Glucomannan, Xanthan, Scleroglucan, Caseinat, oder Mischungen davon; und mindestens ein Lösungsmittel.

10. Verfahren nach Anspruch 9, bei dem in Schritt (b) das Verfestigen des keramischen Formkörpers mittels Gelbildung durch Zugeben einer Metallsalzlösung, durch Einstellung einer bestimmten Temperatur, und/oder durch *in situ* Gelierung erfolgt.

11. Verfahren nach Anspruch 9 oder 10, bei dem in Schritt (b) das Verfestigen des so erhaltenen Formkörpers durch Gelbildung durch einen oder mehrere der folgenden Schritte gestartet wird:
(b1) Benetzen der keramischen Mischung, vorzugsweise einer kolloidalen keramischen Paste, durch eine Spritze und/oder durch einen Extruder und/oder durch Verdüsung und/oder durch Eintauchen des Formkörpers in eine Metallsalzlösung; oder
(b2) Unterschreiten einer bestimmten Temperatur, wobei der Formkörper vorzugsweise kurzzeitig auf eine Temperatur von weniger als 35 °C abgekühlt wird; oder
(b3) Überschreiten einer bestimmten Temperatur, wobei der Formkörper vorzugsweise kurzzeitig auf eine Temperatur von größer als 35 °C erwärmt wird; oder
(b4) *in situ* Gelierung, wobei der Formkörper, der ein Kalziumsalz mit niedriger Löslichkeit enthält, mit einem Säuerungsmittel gemischt wird.

12. Verfahren nach einem der Ansprüche 9 bis 11, bei dem in Schritt (a) das Auftragen einer keramischen Mischung, vorzugsweise einer kolloidalen keramischen Paste, auf generierte Positivmodelle durch Materialablage erfolgt,
(a1) mit einem Spritzen-Stempel-System und/oder mit einem Extruder-System; und/oder
(a2) wobei die Oberfläche des Positivmodells zusätzlich mit einem Trennmittel versehen wird, damit sich der ausgehärtete Formkörper leichter von der Oberfläche des Positivmodells entfernen lässt, und/oder
(a3) wobei das Auftragen kontinuierlich erfolgt, und/oder
(a4) wobei Schichten mit einer Dicke von 0,01 mm bis 5 mm aufgetragen werden.

13. Verfahren nach einem der Ansprüche 9 bis 12, wobei der so erhaltene Formkörper in einem weiteren Schritt (d) mittels subtraktiver Verfahren im Grünzustand vor dem Sintern nachbearbeitet wird, vorzugsweise durch subtraktive Verfahren wie beispielsweise Abtrennen, Polieren, Schleifen und Fräsen.

14. Gelartiger Formkörper erhältlich nach einem Verfahren der Ansprüche 9 bis 13, wobei es sich vorzugsweise um einen mono-materiellen oder multi-materiellen gelartigen dentalen Formkörper handelt.

15. Verfahren zur Herstellung einer gedruckten Zahnrestauration, das folgende Schritte umfasst:
(d) Drucken oder Herausfräsen der gegebenenfalls beaufmaßten Zahnrestauration aus einem formstabilen Material, welches beim späteren Druckprozess als Positivmodell verwendet wird;
(e) Modellieren eines inneren Dentinkerns sowie einer äußeren Schmelzschicht anhand des gescannten Zahns über die CAD-Software oder durch virtuelle vordefinierte Zahnrestaurationen;
(f) Zerlegen der modellierten, gegebenenfalls beaufmaßten Zahnrestauration in horizontale Schichten;
(g) Erstellen von Bahn- und Frässtrategien für die Auftragung sowie spätere Abtragung der verwendeten (keramischen) Druckmaterialien;
(h) Auftragen eines hierin beschriebenen Trennmittels auf die entsprechend beaufmaßte, formstabile, Zahnrestauration;
(i) Drucken der virtuell erzeugten und in horizontale Schichten zerlegten Zahnrestauration auf dem vorher erzeugten beaufmaßten, formstabilen, Positivmodell nach dem Verfahren von Anspruch 9;
(j) Verfestigen der Zahnrestauration durch Gelbildung nach einem der in Anspruch 11 definierten Schritte (b1), (b2), (b3), oder (b4); und
(k) Trocknen der gedruckten Zahnrestauration.

16. Zahnrestauration, erhältlich nach einem Verfahren des Anspruchs 15.

## Claims

1. Use of a ceramic mixture for the production of dental moldings, wherein the ceramic mixture is suitable for the production of dental moldings and comprises the following components:
(a) an uncolored and/or a colored ceramic powder based on ZrO₂, Al₂O₃, zirconia toughed alumina (ZTA), alumina toughed zirconia (ATZ), B₄C, SiC, or Si₃N₄, wherein the ZrO₂ is stabilized, and/or an uncolored and/or a colored ceramic granulate based on ZrO₂, Al₂O₃, zirconia toughed alumina (ZTA), alumina toughed zirconia (ATZ), B₄C, SiC, or Si₃N₄, wherein the ZrO₂ is stabilized, and/or combinations thereof based on ZrO₂, Al₂O₃, zirconia toughed alumina (ZTA), alumina toughed zirconia (ATZ), B₄C, SiC, or Si₃N₄, wherein the ZrO₂ is stabilized;
(b) at least one dispersing agent;
(c) at least one hydrocolloid selected from the group consisting of carubin, gellan gum, hydroxypropyl guar, agarose, carrageenan, alginate, dextran, starch, gum arabic, galactomannans, glucomannan, xanthan, scleroglucan, caseinate, or mixtures thereof; and
(d) at least one solvent.

2. Use of a ceramic mixture according to claim 1, wherein the ceramic mixture comprises at least one anti-drying agent, wherein the anti-drying agent comprises ethylene glycol and/or glycerol.

3. Use of a ceramic mixture according to one of claims 1 or 2, wherein the ceramic mixture comprises as component (a) a ceramic powder and/or a ceramic granulate based on ZrO₂, Al₂O₃, ZTA or ATZ, wherein the ZrO₂ is stabilized in each case with CaO, Y₂O₃, La₂O₃, CeO₂, MgO, Er₂O₃, Pr₂O₃ and/or Nb₂O₅, particularly preferably on the basis of stabilized ZrO₂.

4. Use of a ceramic mixture according to any one of claims 1 to 3, wherein the ceramic mixture comprises from 35% by weight to 99% by weight, preferably from 75% by weight to 95% by weight of component (a).

5. Use of a ceramic mixture according to any one of claims 1 to 4, wherein the ceramic mixture comprises as dispersing agent (b) amino alcohols, such as ethanolamine, carboxylic acids, such as maleic acid and citric acid, carboxylic acid salts, such as citric acid salts or vinyl carboxylic acids, such as ascorbic acid, and salts thereof, as well as mixtures thereof, preferably at least one dispersant selected from ethanolamine, citric acid, citric acid salts and ascorbic acid, particularly preferred are L-ascorbic acid and diammonium hydrogen citrate.

6. Use of a ceramic mixture according to any one of the preceding claims 1 to 5, wherein the ceramic mixture comprises as hydrocolloid (c) a combination of two hydrocolloids.

7. Use of a ceramic mixture according to any one of claims 1 to 6, wherein the ceramic mixture additionally comprises as component (e) at least one binder and/or as component (f) at least one preservative and/or as component (g) at least one plasticizer.

8. Use of a ceramic mixture according to any one of the preceding claims, wherein the ceramic mixture is used for the production of mono-material or multi-material dental moldings, preferably of dental restorations, such as an inlay, onlay, veneer, crown, bracket, bridge or framework, abutment or implant.

9. A method of manufacturing a dental molded article comprising the following steps:
(a) applying a first ceramic mixture to a carrier or to a positive model, wherein a molded article is obtained;
(b) solidifying the obtained molded article by gelation to form a gel-like molded article; and
(c) optionally, repeating steps (a) and (b) with a second or further ceramic mixture having the same or a different composition as the first ceramic mixture; wherein the ceramic mixture comprises the following components: an uncolored and/or a colored ceramic powder based on ZrO₂, Al₂O₃, zirconia toughed alumina (ZTA), alumina toughed zirconia (ATZ), B₄C, SiC, or Si₃N₄, wherein the ZrO₂ is stabilized, and/or an uncolored and/or a colored ceramic granulate based on ZrO₂, Al₂O₃, zirconia toughed alumina (ZTA), alumina toughed zirconia (ATZ), B₄C, SiC, or Si₃N₄,
wherein the ZrO₂ is stabilized, and/or combinations thereof based on ZrO₂, Al₂O₃, zirconia toughed alumina (ZTA), alumina toughed zirconia (ATZ), B₄C, SiC, or Si₃N₄, wherein the ZrO₂ is stabilized;
at least one dispersing agent;
at least one hydrocolloid selected from the group consisting of carubin, gellan, hydroxypropylguar, agarose, carrageenan, alginate, dextran, starch, gum arabic, galactomannans, glucomannan, xanthan, scleroglucan, caseinate, or mixtures thereof; and
at least one solvent.

10. The method according to claim 9, wherein in step (b) the ceramic molded article is solidified by gelation by adding a metal salt solution, by setting a specific temperature, and/or by *in situ* gelation.

11. The method according to claim 9 or 10, wherein in step (b) the solidification of the thus obtained molded article by gelation is started by one or more of the following steps:
(b1) wetting the ceramic mixture, preferably a colloidal ceramic paste, by a syringe and/or by an extruder and/or by atomization and/or by immersion of the molded article in a metal salt solution; or
(b2) going below a certain temperature, wherein the molded article is preferably cooled briefly to a temperature of less than 35 °C; or
(b3) exceeding a certain temperature, wherein the molded article is preferably heated briefly to a temperature of greater than 35°C; or
(b4) *in situ* gelation, wherein the molded article, comprising a calcium salt with low solubility, is mixed with an acidifying agent.

12. The method according to any one of claims 9 to 11, wherein in step (a) a ceramic mixture, preferably a colloidal ceramic paste, is applied to generated positive models by material deposition,
(a1) with a syringe-stamp system and/or with an extruder system; and/or
(a2) wherein a surface of the positive model is additionally provided with a release agent so that the cured molded article can be removed more easily from the surface of the positive model, and/or (a3) wherein the application is continuous, and/or
(a4) wherein layers with a thickness of 0.01 mm to 5 mm are applied.

13. The method according to any one of claims 9 to 12, wherein the molded article is post-processed in a further step (d) by at least one subtractive process in a green state prior to sintering, preferably by subtractive processes such as cutting, polishing, grinding and milling.

14. A gel-like molded article obtainable by a method of claims of 9 to 13, preferably being a mono-material or multi-material gel-like dental molded article.

15. A method of manufacturing a printed dental restoration comprising the following steps:
(d) printing or milling out the possibly over dimensioned dental restoration, from a dimensionally stable material, which is used as a positive model in the subsequent printing process;
(e) modeling of an inner dentin core as well as an outer enamel layer based on a scanned tooth via CAD software or by virtual predefined tooth restorations;
(f) separating the molded, possibly overdimensioned tooth restoration into horizontal layers;
(g) preparing path and milling strategies for the application as well as subsequent removal of the printed (ceramic) materials used;
(h) applying a release agent as described herein to the correspondingly overdimensioned, dimensionally stable tooth restoration;
(i) printing a virtually created dental restoration, divided into horizontal layers, on the previously created overdimensioned, dimensionally stable, positive model according to the method of claim 9;
(j) solidifying the dental restoration by gelation according to one of the steps (b1), (b2), (b3), or (b4) defined in claim 11; and
(k) drying of the printed dental restoration.

16. A dental restoration obtainable by a method of claim 15.

## Revendications

1. Utilisation d'un mélange céramique pour la fabrication de corps moulés dentaires, le mélange céramique étant adapté à la fabrication de corps moulés dentaires et contenant les composants suivants :
(a) une poudre céramique non colorée et/ou colorée à base de ZrO₂ , Al₂ O_{3,} d'oxyde d'aluminium renforcé au dioxyde de zirconium (ZTA), d'oxyde de zirconium renforcé à l'oxyde d'aluminium (ATZ), de B₄C, de SiC ou de Si₃N₄, le ZrO₂ étant stabilisé, et/ou un granulat céramique non coloré et/ou coloré à base de ZrO₂ , Al₂O₃, d'alumine renforcée au dioxyde de zirconium (ZTA), d'oxyde de zirconium renforcé à l'alumine (ATZ), de B₄C, SiC ou Si₃N_{4 ,}le ZrO₂ étant stabilisé, et/ou des combinaisons de ceux-ci à base de ZrO₂, Al₂O₃, d'alumine renforcée au dioxyde de zirconium (ZTA), d'oxyde de zirconium renforcé à l'alumine (ATZ), de B₄C, SiC ou Si₃N₄ , le ZrO₂ étant stabilisé ;
(b) au moins un agent dispersant ;
(c) au moins un hydrocolloïde choisi parmi le groupe comprenant la carubine, le gellan, l'hydroxypropylguar, l'agarose, la carraghénine, l'alginate, le dextrane, l'amidon, la gomme arabique, les galactomannanes, le glucomannane, le xanthane, le scléroglucane, le caséinate, ou des mélanges de ceux-ci; et
(d) au moins un solvant.

2. Utilisation d'un mélange céramique selon la revendication 1, dans laquelle le mélange céramique contient au moins un agent anti-dessiccation, l'agent anti-dessiccation comprenant de l'éthylène glycol et/ou de la glycérine.

3. Utilisation d'un mélange céramique selon l'une des revendications 1 ou 2, le mélange céramique contenant comme composant (a) une poudre céramique et/ou un granulat céramique à base de ZrO₂, Al₂O₃, ZTA ou ATZ, le ZrO₂ étant respectivement combiné avec CaO, Y₂O₃, La₂O₃, CeO₂, MgO, Er₂O₃, Pr₂O₃ et/ou Nb₂O_{5,} de préférence à base de ZrO₂ stabilisé.

4. Utilisation d'un mélange céramique selon l'une des revendications 1 à 3, le mélange céramique contenant de 35 % en poids à 99 % en poids, de préférence de 75 % en poids à 95 % en poids, du composant (a).

5. Utilisation d'un mélange céramique selon l'une des revendications 1 à 4, dans lequel le mélange céramique contient comme agent dispersant (b) des aminoalcools, tels que l'éthanolamine, des acides carboxyliques, tels que l'acide maléique et l'acide citrique, des sels d'acides carboxyliques, tels que des sels d'acide citrique ou des acides carboxyliques vinylogènes, tels que l'acide ascorbique, et leurs sels, ainsi que des mélanges de ceux-ci, de préférence au moins un agent dispersant choisi parmi l'éthanolamine, l'acide citrique, les sels d'acide citrique et l'acide ascorbique, l'acide L-ascorbique et l'hydrogénocitrate de diammonium étant particulièrement préférés.

6. Utilisation d'un mélange céramique selon l'une des revendications 1 à 5 précédentes, le mélange céramique contenant comme hydrocolloïde (c) une combinaison de deux hydrocolloïdes.

7. Utilisation d'un mélange céramique selon l'une des revendications 1 à 6, le mélange céramique contenant en outre comme composant (e) au moins un liant et/ou comme composant (f) au moins un conservateur et/ou comme composant (g) au moins un plastifiant.

8. Utilisation d'un mélange céramique selon l'une des revendications précédentes, le mélange céramique étant utilisé pour la fabrication de corps moulés dentaires mono-matériaux ou multi-matériaux, de préférence de restaurations dentaires, telles qu'un inlay, un onlay, une facette, une couronne, un bracket, un bridge ou une armature, un pilier ou un implant.

9. Procédé de fabrication d'un corps moulé dentaire, comprenant les étapes suivantes :
(a) application d'un premier mélange céramique sur un support ou sur un modèle positif, ce qui permet d'obtenir un corps moulé ;
(b) solidification de la pièce moulée ainsi obtenue par gélification pour former une pièce moulée de type gel; et
(c) le cas échéant, répéter les étapes (a) et (b) avec un deuxième mélange céramique ou d'autres mélanges céramiques ayant la même composition ou une composition différente de celle du premier mélange céramique ; le mélange céramique contenant les composants suivants :
une poudre céramique non colorée et/ou colorée à base de ZrO₂ , Al₂ O₃ , d'alumine renforcée au dioxyde de zirconium (ZTA), d'oxyde de zirconium renforcé à l'alumine (ATZ), de B₄ C, de SiC ou de Si₃ N_{4,}le ZrO₂ étant stabilisé, et/ou un granulat céramique non coloré et/ou coloré à base de ZrO₂, Al₂O_{3 ,} d'alumine renforcée au dioxyde de zirconium (ZTA), d'oxyde de zirconium renforcé à l'alumine (ATZ), de B(4)c,SiC ou Si₃N_{4 ,}le ZrO₂ étant stabilisé, et/ou des combinaisons de ceux-ci à base de ZrO₂ , Al₂O₃, d'alumine renforcée au dioxyde de zirconium (ZTA), d'oxyde de zirconium renforcé à l'alumine (ATZ), de B₄C, SiC ou Si₃ N₄ , le ZrO₂ étant stabilisé ;
au moins un agent dispersant ;
au moins un hydrocolloïde choisi parmi le groupe comprenant la carubine, le gellan, l'hydroxypropylguar, l'agarose, la carraghénine, l'alginate, le dextrane, l'amidon, la gomme arabique, les galactomannanes, le glucomannane, le xanthane, le scléroglucane, le caséinate, ou des mélanges de ceux-ci; et au moins un solvant.

10. Procédé selon la revendication 9, dans lequel, à l'étape (b), la solidification du corps moulé en céramique s'effectue par gélification grâce à l'ajout d'une solution de sel métallique, au réglage d'une température déterminée et/ou à une gélification *in situ.*

11. Procédé selon la revendication 9 ou 10, dans lequel, à l'étape (b), la solidification du corps moulé ainsi obtenu par gélification est déclenchée par une ou plusieurs des étapes suivantes :
(b1) mouillage du mélange céramique, de préférence d'une pâte céramique colloïdale, à l'aide d'une seringue et/ou d'une extrudeuse et/ou par atomisation et/ou par immersion du corps moulé dans une solution de sel métallique ; ou
(b2) descente en dessous d'une certaine température, le corps moulé étant de préférence refroidi brièvement à une température inférieure à 35 °C; ou
(b3) dépassement d'une certaine température, le corps moulé étant de préférence chauffé brièvement à une température supérieure à 35 °C; ou
(b4) gélification *in situ,* le corps moulé contenant un sel de calcium à faible solubilité étant mélangé à un agent acidifiant.

12. Procédé selon l'une des revendications 9 à 11, dans lequel, à l'étape (a), l'application d'un mélange céramique, de préférence d'une pâte céramique colloïdale, sur des modèles positifs générés s'effectue par dépôt de matière,
(a1) à l'aide d'un système de pulvérisation-estampage et/ou d'un système d'extrusion ; et/ou
(a2) la surface du modèle positif étant en outre pourvue d'un agent de démoulage afin que le corps moulé durci puisse être retiré plus facilement de la surface du modèle positif, et/ou
(a3) l'application s'effectuant en continu, et/ou
(a4) des couches d'une épaisseur comprise entre 0,01 mm et 5 mm sont appliquées.

13. Procédé selon l'une des revendications 9 à 12, dans lequel le corps moulé ainsi obtenu est retravaillé dans une étape supplémentaire (d) au moyen de procédés soustractifs à l'état vert avant le frittage, de préférence par des procédés soustractifs tels que la découpe, le polissage, le meulage et le fraisage.

14. Corps moulé de type gel pouvant être obtenu selon un procédé selon les revendications 9 à 13, dans lequel il s'agit de préférence d'un corps moulé dentaire de type gel mono-matériel ou multi-matériel.

15. Procédé de fabrication d'une restauration dentaire imprimée, comprenant les étapes suivantes :
(d) Impression ou fraisage de la restauration dentaire éventuellement dimensionnée à partir d'un matériau indéformable, qui est utilisé comme modèle positif lors du processus d'impression ultérieur ;
(e) Modélisation d'un noyau interne en dentine et d'une couche externe en émail à partir de la dent scannée à l'aide du logiciel de CAO ou à partir de restaurations dentaires virtuelles prédéfinies;
(f) Découpage de la restauration dentaire modélisée, éventuellement dimensionnée, en couches horizontales ;
(g) Création de stratégies de trajectoire et de fraisage pour l'application et l'enlèvement ultérieur des matériaux d'impression (céramiques) utilisés ;
(h) Application d'un agent de démoulage décrit ici sur la restauration dentaire dimensionnée et indéformable ;
(i) Impression de la restauration dentaire générée virtuellement et décomposée en couches horizontales sur le modèle positif dimensionné et indéformable préalablement créé selon le procédé de la revendication 9 ;
(j) Consolidation de la restauration dentaire par gélification selon l'une des étapes (b1), (b2), (b3) ou (b4) définies dans la revendication 11 ; et
(k) Séchage de la restauration dentaire imprimée.

16. Restauration dentaire pouvant être obtenue selon un procédé selon la revendication 15.
